# EUROPEAN PATENT SPECIFICATION

(11) **EP 2 369 666 B1**
(45) Date of publication and mention of the grant of the patent: **12.09.2018**
(21) Application number: 09835104.2
(22) Date of filing: 22.12.2009
(51) Int. Cl.: H01M 4/525, H01M 4/505, C01G 53/00, C01G 45/12, C01G 51/00, H01M 4/04, H01M 4/131, H01M 4/1391, H01M 4/02

(54) **PLATE-SHAPED PARTICLES FOR POSITIVE ELECTRODE MATERIAL OF LITHIUM SECONDARY BATTERIES, LITHIUM SECONDARY BATTERY POSITIVE ELECTRODE ACTIVE MATERIAL FILMS, MANUFACTURING METHOD THEREFOR, LITHIUM SECONDARY BATTERY POSITIVE ELECTRODE ACTIVE MATERIAL MANUFACTURING METHOD, AND LITHIUM SECONDARY BATTERIES**
PLATTENFÖRMIGE TEILCHEN FÜR EIN POSITIV-ELEKTRODENMATERIAL VON LITHIUM-SEKUNDÄRBATTERIEN, LITHIUM-SEKUNDÄRBATTERIE-POSITIVELEKTRODEN- AKTIVMATERIALFILME, HERSTELLUNGSVERFAHREN DAFÜR, VERFAHREN ZUR HERSTELLUNG VON LITHIUM-SEKUNDÄRBATTERIE-POSITIVELEKTRODENAKTIVMATERIAL UND LITHIUM-SEKUNDÄRBATTERIEN
PARTICULES EN FORME DE PLAQUE POUR MATÉRIAU ACTIF D'ÉLECTRODE POSITIVE DE BATTERIES AUXILIAIRES AU LITHIUM, FILMS DE MATÉRIAU ACTIF D'ÉLECTRODE POSITIVE DE BATTERIES AUXILIAIRES AU LITHIUM, PROCÉDÉ DE FABRICATION DE CEUX-CI, PROCÉDÉ DE FABRICATION DE MATÉRIAU ACTIF D'ÉLECTRODE POSITIVE DE BATTERIES AUXILIAIRES AU LITHIUM ET BATTERIES AUXILIAIRES AU LITHIUM

(30) Priority: 24.12.2008 JP 2008326997; 17.03.2009 JP 2009064862; 10.06.2009 JP 2009138984; 21.08.2009 JP 2009191728; 09.10.2009 JP 2009235138
(43) Date of publication of application: 28.09.2011
(73) Proprietor: NGK Insulators, Ltd., Nagoya-shi, Aichi 467-8530 (JP)
(72) Inventor: SUGIURA, Ryuta, Nagoya-shi Aichi 467-8530 (JP); KOBAYASHI, Nobuyuki, Nagoya-shi Aichi 467-8530 (JP); YOKOYAMA, Shohei, Nagoya-shi Aichi 467-8530 (JP); NANATAKI, Tsutomu, Nagoya-shi Aichi 467-8530 (JP)
(74) Representative: Naylor, Matthew John
(86) International application number: PCT/JP2009/071853
(87) International publication number: WO 2010/074314

(56) References cited:
- EP-A1- 0 672 622
- EP-A1- 1 972 604
- WO-A1-01/20696
- WO-A1-03/088382
- JP-A- 3 272 564
- JP-A- 8 055 624
- JP-A- 2001 297 761
- JP-A- 2001 351 687
- JP-A- 2002 279 985
- JP-A- 2002 324 544
- JP-A- 2003 002 653
- JP-A- 2003 132 887
- JP-A- 2005 197 004
- JP-A- 2008 258 160
- JP-A- 2009 295 514
- JP-A- 2009 301 850
- JP-T- 2008 523 567
- US-A1- 2005 014 065
- US-A1- 2005 142 442
- US-A1- 2006 035 151
- XIE J ET AL: "Orientation dependence of Li-ion diffusion kinetics in LiCoO2 thin films prepared by RF magnetron sputtering", SOLID STATE IONICS, NORTH HOLLAND PUB. COMPANY. AMSTERDAM; NL, NL, vol. 179, no. 9-10, 15 May 2008 (2008-05-15), pages 362-370, XP022609549, ISSN: 0167-2738, DOI: 10.1016/J.SSI.2008.02.051 [retrieved on 2008-04-08]
- XIE ET AL: "Kinetics investigation of a preferential (104) plane oriented LiCoO2 thin film prepared by RF magnetron sputtering", SOLID STATE IONICS, NORTH HOLLAND PUB. COMPANY. AMSTERDAM; NL, NL, vol. 178, no. 19-20, 7 August 2007 (2007-08-07), pages 1218-1224, XP022188809, ISSN: 0167-2738, DOI: 10.1016/J.SSI.2007.06.007
- JIAN XIE ET AL.: 'Orientation dependence of Li-ion diffusion kinetics in LiCo02 thin films prepared by RF magnetron sputtering' SOLID STATE IONICS vol. 179, 15 May 2008, pages 362 - 370, XP022609549
- P. J. BOUWMAN ET AL.: 'Influence of Diffusion Plane Orientation on Electrochemical Properties of Thin Film LiCo02 Electrodes' JOURNAL OF THE ELECTROCHEMICAL SOCIETY vol. 149, 12 April 2002, pages A699 - A709, XP008147451

## Description

### Technical Field

The present invention relates to a cathode active material having a layered rock salt structure for a lithium secondary battery and a method for manufacturing the same, and more particularly, to a plate-like particle for the cathode active material (the definition of a plate-like particle will be described later), a cathode active material film (the distinction between a film and particles will be described later), methods for manufacturing the particle and film, and a method for manufacturing the cathode active material. Further, the present invention relates to a lithium secondary battery having a positive electrode which includes the above-mentioned plate-like particle or film.

### Background Art

A cobalt-based cathode active material is widely used as a material for producing a positive electrode of a lithium secondary battery (may be referred to as a lithium ion secondary cell). The cobalt-based cathode active material (typically, LiCoO₂) has a so-called α-NaFeO₂ type layered rock salt structure. In the cobalt-based cathode active material, intercalation and deintercalation of lithium ions (Li⁺) occur through a crystal plane other than the (003) plane (e.g., the (101) plane or the (104) plane). Through such intercalation and deintercalation of lithium ions, charge and discharge are carried out.

US 2005/0142442 discloses a positive electrode material for a lithium secondary battery. The material is formed from Li-Mn-Ni-Co-O.

US 2005/0014065 discloses loses a positive electrode material for a lithium rechargeable battery. The material is formed from Li-Ni-Co-Mn-X-O, where X is Al, Mg, Sr, Ti or La.

Xie et al Solid Stae Ionics 179 (2008) 362-370 and Xie et al Solid Stae Ionics 178 (2007) 1218-1224 discloses results of studies on the preferred orientation of thin films of LiCoO₂ dependent on film thickness.

WO 01/20696 also discloses the formation of LiCoO₂ thin films.

JP-A-2003-002653 discloses Cr-containing Li materials for Li secondary batteries.

EP-A-1972604 discloses a process for forming plate-like ceramic particles.

### Summary of the Invention

A cathode active material of this kind for a cell brings about improvement in cell capacity by means of exposure of the crystal plane through which lithium ions are favorably intercalated and deintercalated (the plane other than the (003) plane; for example, the (101) plane or the (104) plane) as much extent as possible to an electrolyte. Demand exists not only for merely improving capacity, but also for improving as many characteristics as possible, such as durability and rate characteristic. The present invention has been conceived to solve such a problem. That is, an object of the present invention is to provide a lithium secondary battery which has improved capacity, durability, and rate characteristic as compared with a conventional lithium secondary battery.
In one aspect of the present invention, there is provided a plate-like particle for a lithium secondary battery cathode active material, as set out in claim 1. The particle can be formed to a thickness of 100 µm or less (e.g., 20 µm or less). "Layered rock salt structure" refers to a crystal structure in which lithium layers and layers of a transition metal other than lithium are arranged in alternating layers with an oxygen layer therebetween; i.e., a crystal structure in which transition metal ion layers and lithium layers are arranged in alternating layers via oxide ions (typically, α-NaFeO₂ type structure: structure in which a transition metal and lithium are arrayed orderly in the direction of the [111] axis of cubic rock salt type structure). "The (104) plane is oriented in parallel with the plate surface" can be rephrased as: the (104) plane is oriented such that the [104] axis, which is normal to the (104) plane, is in parallel with the direction of the normal to the plate surface.

The above-mentioned characteristic can be rephrased as: in the plate-like particle for a lithium secondary battery cathode active material of the present invention, the [003] axis in the layered rock salt structure is in a direction which intersects the normal to the plate surface of the particle. That is, the particle is formed such that a crystal axis (e.g., the [104] axis) which intersects the [003] axis is in a direction orthogonal to the plate surface.

"Plate-like particle" refers to a particle whose external shape is plate-like. The concept of "plate-like" is apparent under social convention without need of particular description thereof in the present specification. However, if the description were to be added, "plate-like" would be defined, for example, as follows.

Namely, "plate-like" refers to a state in which, when a particle which is placed on a horizontal surface (a surface orthogonal to the vertical direction, along which gravity acts) stably (in a manner as not to further fall down even upon subjection to an external impact (excluding such a strong impact as to cause the particle to fly away from the horizontal surface)) is cut by a first plane and a second plane which are orthogonal to the horizontal surface (the first plane and the second plane intersect each other, typically at right angles), and the sections of the particle are observed, a dimension along the width direction (the dimension is referred to as the "width" of the particle), which is along the horizontal surface (in parallel with the horizontal surface or at an angle of α degrees (0 < α < 45) with respect to the horizontal surface), is greater than a dimension along the thickness direction (the dimension is referred to as the "thickness" of the particle), which is orthogonal to the width direction. The above-mentioned "thickness" does not include a gap between the horizontal surface and the particle.

The plate-like particle of the present invention is usually formed in a flat plate-like form. "Flat plate-like form" refers to a state in which, when a particle is placed stably on a horizontal surface, the height of a gap formed between the horizontal surface and the particle is less than the thickness of the particle. Since a plate-like particle of this kind is not usually curved to an extent greater than the state, the above-mentioned definition is appropriate for the plate-like particle of the present invention.

In a state in which a particle is placed stably on a horizontal surface, the thickness direction is not necessarily parallel with the vertical direction. This will be discussed under the assumption that the sectional shape of particle placed stably on a horizontal surface, as cut by the first plane or the second plane, should be classified into the closest one among (1) rectangular shape, (2) diamond shape, and (3) elliptic shape. When the sectional shape of the particle is close to (1) rectangular shape, the width direction is parallel with the horizontal surface in the above-mentioned state, and the thickness direction is parallel with the vertical direction in the above-mentioned state.

Meanwhile, when the sectional shape of the particle is (2) diamond shape or (3) elliptic shape, the width direction may form some angle (45 degrees or less; typically, about a few degrees to about 20 degrees) with respect to the horizontal surface. In this case, the width direction is a direction which connects the two most distant points on the outline of the section (this definition is not appropriate for the case of (1) rectangular shape, since the direction according thereto is along a diagonal of the rectangular shape).

The "plate surface" of a particle refers to a surface which faces, in a state in which the particle is placed stably on a horizontal surface, the horizontal surface, or a surface which faces an imaginary plane located above the particle as viewed from the horizontal surface and being parallel with the horizontal surface. Since the "plate surface" of a particle is the widest surface on the plate-like particle, the "plate surface" may be referred to as the "principal surface." A surface which intersects (typically, at right angles) the plate surface (principal surface); i.e., a surface which intersects the plate surface direction (or in-plane direction), which is perpendicular to the thickness direction, is referred to as an "end surface," since the surface arises at an edge when the particle in a state of being stably placed on the horizontal surface is viewed in plane (when the particle in a state of being stably placed on the horizontal surface is viewed from above with respect to the vertical direction).

Nevertheless, in many cases, the plate-like particle for a lithium secondary battery cathode active material of the present invention is formed such that the sectional shape of the particle is close to (1) rectangular shape. Thus, in the plate-like particle for a lithium secondary battery cathode active material of the present invention, the thickness direction may be said to be parallel with the vertical direction in a state in which the particle is placed stably on a horizontal surface. Similarly, in the plate-like particle for a lithium secondary battery cathode active material of the present invention, the "plate surface" of the particle may be said to be a surface orthogonal to the thickness direction.

The lithium secondary battery of the present invention includes a positive electrode which contains, as a cathode active material, the plate-like particles for a cathode active material of the present invention; a negative electrode which contains, as an anode active material, a carbonaceous material or a lithium-occluding material; and an electrolyte provided so as to intervene between the positive electrode and the negative electrode.

In formation of a positive electrode of a lithium secondary battery, for example, the plate-like particles for a cathode active material are dispersed in a binder so as to form a cathode active material layer. A laminate of the cathode active material layer and a predetermined cathode collector serves as the positive electrode. That is, in this case, the positive electrode is formed by stacking the cathode active material layer, which contains the plate-like particles, on the cathode collector.

In this case, the positive electrode of the lithium secondary battery can be formed by stacking the cathode active material film on a predetermined cathode collector. The film may be formed to a thickness of 100 µm or less (e.g., 20 µm or less).

The above-mentioned characteristic can be rephrased as: in the cathode active material film for a lithium secondary battery of the present invention, the [003] axis in the layered rock salt structure is oriented in a direction which intersects the normal to the plate surface of the film. That is, the particle is formed such that a crystal axis (e.g., the [104] axis) which intersects the [003] axis is oriented in a direction orthogonal to the plate surface.

The "thickness direction" of a film refers to a direction parallel with the vertical direction in a state in which the film is placed stably on a horizontal surface (a dimension of the film along the direction is referred to as "thickness"). The "plate surface" of a film refers to a surface orthogonal to the thickness direction of the film. Since the "plate surface" of the film is the widest surface on the film, the "plate surface" may be referred to as the "principal surface." A surface which intersects (typically, at right angles) the plate surface (principal surface); i.e., a surface which intersects the plate surface direction (or in-plane direction), which is perpendicular to the thickness direction, is referred to as an "end surface," since the surface arises at an edge when the film in a state of being stably placed on the horizontal surface is viewed in plane (when the film in a state of being stably placed on the horizontal surface is viewed from above with respect to the vertical direction). The above-mentioned "thickness" does not include a gap between the horizontal surface and the film.

The cathode active material film of the present invention is usually formed flat. "Flat" refers to a state in which, when a film is placed stably on a horizontal surface, the height of a gap formed between the horizontal surface and the film is less than the thickness of the film. Since a cathode active material film of this kind is not usually curved to an extent greater than the state, the above-mentioned definition is appropriate for the cathode active material film of the present invention.

The lithium secondary battery of the present invention includes a positive electrode which includes the cathode active material film of the present invention; a negative electrode which contains a carbonaceous material or a lithium-occluding material as an anode active material; and an electrolyte provided so as to intervene between the positive electrode and the negative electrode.

In formation of the positive electrode of a lithium secondary battery, for example, a laminate of the cathode active material film and a predetermined cathode collector (for example, a laminate formed by laminating the cathode active material film and an electric conductor film together through vapor deposition (e.g., sputtering), application, or the like) serves as the positive electrode. In this case, the cathode collector may be provided on at least one of the two plate surfaces of the cathode active material film. That is, the cathode collector may be provided on only one of the two plate surfaces of the cathode active material film. Alternatively, the cathode collector may be provided on both surfaces (both of the two plate surfaces) of the cathode active material film. When the cathode collector is provided on each of both surfaces of the cathode active material film, one of them may be formed thicker than the other in order to support the cathode active material film, and the other may be formed so as to have a structure (mesh-like, porous or the like) such that it does not inhibit the intercalation and deintercalation of lithium ions in the cathode active material film.

As mentioned above, in formation of the positive electrode, the "plate-like particles for a cathode active material" in the present invention can be dispersed in the cathode active material layer. Meanwhile, the "cathode active material film" in the present invention is a self-standing film (a film which can be handled by itself after formation) which can form the positive electrode through lamination to the cathode collector. As in the case of examples to be described later, the film may be crushed into fine particles (the resultant particles correspond to the "plate-like particles for a cathode active material" in the present invention), followed by dispersion in the cathode active material layer. In this way, the distinction between "particles" and "film" is apparent to those skilled in the art in association with modes of application to formation of the positive electrode.

Regarding the degree of orientation, preferably, the ratio of intensity of diffraction by the (003) plane to intensity of diffraction by the (104) plane, [003]/[104], as obtained by X-ray diffraction falls within a range of 0.005 to 1.0.

When the ratio [003]/[104] is 1.0 or less, the deintercalation of lithium ions is facilitated, resulting in a remarkable improvement in charge-discharge characteristics. However, when the ratio [003]/[104] is less than 0.005, the cycle characteristic deteriorates. Conceivably, this is because, when the degree of orientation is excessively high (i.e., crystals are oriented to an excessively high degree), a change in the volume of crystal associated with intercalation and deintercalation of lithium ions causes the particles and the film to be apt to break (the specifics of the reason for the deterioration in cycle characteristic are not clear).

The plate-like particle for a lithium secondary battery cathode active material or the cathode active material film for a lithium secondary battery of the present invention is formed such that so-called "uniaxial orientation" is attained. Specifically, the plate-like particle or the cathode active material film is formed such that the (h'k'l') planes different from a (hkl) plane oriented in parallel with the plate surface are oriented in a plurality of directions. In other words, in the plate-like particle or the cathode active material film, the [hkl] and [h'k'l'] axes are present such that, while the [hkl] axis (e.g., the [104] axis) is oriented in a fixed direction (in the thickness direction) at all times, the [h'k'l'] axes (e.g., the [003] axes) are oriented in such a manner as to revolve about the [hkl] axis.

In this case, the plate-like particle or the cathode active material film has the same crystal axis [hkl] in the plate surface. Meanwhile, as for the plate surface direction (in-plane direction) perpendicular to the thickness direction, the [h'k'l'] axes are oriented in a plurality of (various; i.e., random) directions. In other words, the plate-like particle or the cathode active material film is in a state in which, as viewed in plane, a large number of regions are arrayed two-dimensionally, the [h'k'l'] axis is oriented in the same direction in each region, and the adjacent regions differ in direction in which the [h'k'l'] axes are oriented.

Thus, there is restrained the occurrence of cracking in the particle and the film caused by a change in the volume of crystal associated with intercalation and deintercalation of lithium ions, so that the cell performance is unlikely to deteriorate in the course of charge-discharge cycles. Particularly, at a relatively large thickness (e.g., 2 µm to 100 µm, preferably 5 µm to 50 µm, more preferably 5 µm to 20 µm), the effect of restraining the occurrence of cracking is of particular note. The reason for this is not rendered completely clear, but is assumed to be as follows.

A cathode active material having a layered rock salt structure has different coefficients of volume expansion-contraction for crystal orientations in intercalation and deintercalation of lithium ions. Thus, by means of two-dimensionally dividing the plate-like particle or the cathode active material film into a plurality of regions with different in-plane orientations while exposing the same crystal plane (e.g., the (104) plane) at the plate surface, stress stemming from volume expansion can be absorbed at boundary portions, and the individual regions can be expanded or contracted so as to reduce stress. As a result, while intercalation and deintercalation of lithium ions are activated, the occurrence of cracking in the particle and the film can be restrained.

Such a structure can be confirmed by means of an X-ray diffractometer, a transmission electron microscope, or the like. For example, such a structure can be confirmed by means of X-ray diffraction as follows: a diffraction pattern appearing on a pole figure is not spot-like, but ring-like.

Preferably, the size of the individual regions is such that a length along an in-plane direction is 0.5 µm to 20 µm. When the length is in excess of 20 µm, cracking is apt to occur in the region. When the length is less than 0.5 µm, boundary portions of the regions, at which boundary portions lithium ions encounter difficulty in moving, increase, resulting in deterioration in output characteristics.

The plate-like particle or the cathode active material film can assume a multilayered structure (a structure in which a plurality of layers are stacked together in the thickness direction). In this case, each of the layers may have the above-mentioned state of orientation, or at least the surface layer (a layer having the plate surface) may have the above-mentioned state of orientation.

The above-mentioned particles and film can be manufactured by a method which includes the following steps: a step of forming a self-standing sheet-like compact having a thickness of 100 µm or less from material particles, and a step of sintering the compact.

Specifically, the above-mentioned particles and film can be manufactured by a method which includes the following steps (1) and (2): (1) a step of forming a sheet or particles which contain a lithium-unintroduced material (e.g., plate-like Co₃O₄ particles) in which the (h00) plane is oriented in parallel with the plate surface of a particle (a lithium-unintroduced sheet or lithium-unintroduced particles), and (2) a step of introducing lithium into the lithium-unintroduced material (Co₃O₄ particles or the like).

The step (1) can include the following steps: a step of forming a green sheet (having a thickness of, for example, 20 µm or less) which contains the lithium-unintroduced material and a bismuth oxide (e.g., Co₃O₄ and Bi₂O₃), and a step of sintering the green sheet at a temperature falling within a range of 900°C to 1,300°C.

The following step (3) can further be included between the above-mentioned steps (1) and (2): (3) a step of crushing the lithium-unintroduced sheet into a large number of the lithium-unintroduced particles (e.g., Co₃O₄ particles; the above-mentioned bismuth oxide may be included).

When the step (3) is included, the step (2) can include the following step: a step of mixing the lithium-unintroduced particles (e.g., Co₃O₄ particles) yielded by the crushing step and a lithium salt (e.g., Li₂CO₃), and heating the resultant mixture.

The crushing step can be performed after lithium introduction. Specifically, the following step (3') can further be included after the above-mentioned step (2): (3') a step of crushing the sheet which has undergone lithium introduction, into a large number of plate-like particles. In this case, the manufacturing method is as follows: first, there is formed the lithium-unintroduced sheet in which the (h00) plane is oriented in parallel with the plate surface; next, lithium is introduced into the lithium-unintroduced sheet; subsequently, the lithium-introduced sheet is crushed into a large number of plate-like particles.

According to the present invention, in the plate-like particles and film which have the above-mentioned structure, a plane through which lithium ions are favorably intercalated and deintercalated (a plane other than the (003) plane; e.g., the (104) plane) is oriented in parallel with the plate surface. Thus, the exposure (contact) of the plane to an electrolyte increases to a greater extent, and the percentage of exposure of the (003) plane at the surface of the particles and film greatly lowers.

Thus, for example, in the case of the film to be used as material for a positive electrode of a solid-type lithium secondary battery, high capacity and high rate characteristic can be attained simultaneously. Alternatively, in the case of the plate-like particles to be used as material for a positive electrode of a liquid-type lithium secondary battery, even when the particle size is increased for improving durability and attaining high capacity, high rate characteristic can be maintained.

As mentioned above, the present invention can provide a lithium secondary battery whose capacity, durability, and rate characteristic are improved as compared with those of a conventional lithium secondary battery.

Meanwhile, the plate-like particle for cathode active material and the cathode active material film according to the present invention may be formed to be dense (e.g., with a porosity of 10 % or less). Specifically, porosity falls preferably within a range of 3 to 10%. Porosity less than 3% is unpreferable for the following reason: due to the volume expansion-contraction associated with charge-discharge, concentration of stress occurs at a boundary between the domains whose crystal orientations are different in the particle or the film. This causes cracking then capacity is apt to be low. On the other hand, porosity more than 10% is unpreferable because charge-discharge capacity per volume decreses.

### Brief Description of the Drawings

FIG. 1A is a sectional view of the schematic configuration of a lithium secondary battery according to an embodiment of the present invention.
FIG. 1B is an enlarged sectional view of a positive electrode shown in FIG. 1A.
FIG. 2A is an enlarged perspective view of a plate-like particle for cathode active material shown in FIG. 1.
FIG. 2B is an enlarged perspective view of a cathode active material particle of a comparative example.
FIG. 2C is an enlarged perspective view of a cathode active material particle of a comparative example.
FIG. 2D is an enlarged perspective view of the plate-like particle for cathode active material shown in FIG. 2A.
FIG. 2E is an enlarged perspective view of the plate-like particle for cathode active material shown in FIG. 2A.
FIG. 3A is a scanning electron micrograph showing the surface (plate surface) of an (h00)-oriented Co₃O₄ particle yielded by a sheet formation step in a manufacturing method of the present invention.
FIG. 3B is a scanning electron micrograph showing the surface (plate surface) of an LiCoO₂ particle yielded (having undergone the lithium introduction step) by the manufacturing method of the present invention.
FIG. 3C is a scanning electron micrograph showing the cross section (end surface) of an LiCoO₂ particle yielded (having undergone the lithium introduction step) by the manufacturing method of the present invention.
FIG. 3D is a scanning electron micrograph showing the cross section (end surface) of an LiCoO₂ particle yielded (having undergone the lithium introduction step) by the manufacturing method of the present invention.
FIG. 4A is a scanning electron micrograph showing ordinary (111)-oriented Co₃O₄ particles (comparative example).
FIG. 4B is a scanning electron micrograph showing LiCoO₂ particles of the comparative example yielded through the above-mentioned lithium introduction step being performed on the ordinary Co₃O₄ particles (comparative example) shown in FIG. 4A.
FIG. 5 is a diagram showing X-ray diffraction profiles of the LiCoO₂ particles shown in FIGS. 3B and 4B.
FIG. 6A is a scanning electron micrograph showing the surface (plate surface) of an LiCoO₂ particle yielded by the manufacturing method of the present invention.
FIG. 6B is a scanning electron micrograph showing the cross section (polished) of the LiCoO₂ particle yielded by the manufacturing method of the present invention.
FIG. 7A is a sectional view of the schematic configuration of a lithium secondary battery of a modification.
FIG. 7B is an enlarged sectional view of a cathode active material layer shown in FIG. 7A.
FIG. 8 is a sectional view of the schematic configuration of a lithium secondary battery of another modification.
FIG. 9 is a sectional view of the structure of a modification of the positive electrode shown in FIG. 1B.
FIG. 10A is a sectional view of the structure of a modification of the positive electrode shown in FIG. 1B.
FIG. 10B is a sectional view of the structure of a modification of the positive electrode shown in FIG. 1B.

### Description of Embodiments

Preferred embodiments of the present invention will next be described by use of examples and comparative examples. The following description of the embodiments is nothing more than the specific description of mere example embodiments of the present invention to the possible extent in order to fulfill description requirements (descriptive requirement and enabling requirement) of specifications required by law. Thus, as will be described later, naturally, the present invention is not limited to the specific configurations of embodiments and examples to be described below. Modifications that can be made to the embodiments and examples are collectively described herein principally at the end, since insertion thereof into the description of the embodiments would disturb consistent understanding of description of the embodiments.

### <Configuration of lithium secondary battery>

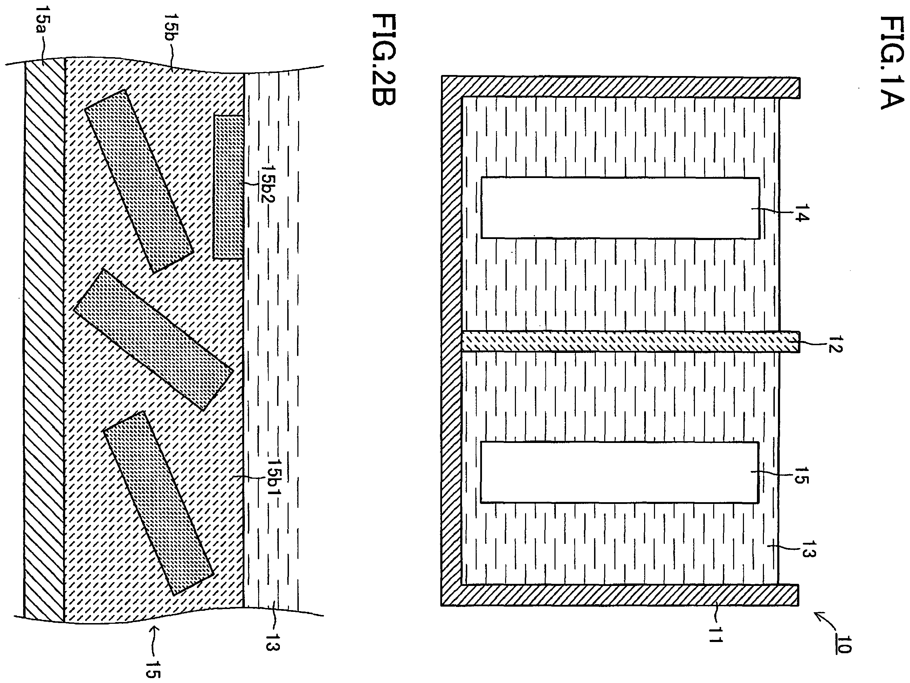

FIG. 1A is a sectional view of the schematic configuration of a lithium secondary battery 10 according to an embodiment of the present invention.

Referring to FIG. 1A, the lithium secondary battery 10 of the present embodiment is of a so-called liquid type and includes a cell casing 11, a separator 12, an electrolyte 13, a negative electrode 14, and a positive electrode 15.

The separator 12 is provided so as to halve the interior of the cell casing 11. The cell casing 11 accommodates the liquid electrolyte 13. The negative electrode 14 and the positive electrode 15 are provided within the cell casing 11 in such a manner as to face each other with the separator 12 located therebetween.

For example, a nonaqueous-solvent-based electrolytic solution prepared by dissolving an electrolyte salt, such as a lithium salt, in a nonaqueous solvent, such as an organic solvent, is preferably used as the electrolyte 13, in view of electrical characteristics and easy handlability. However, a polymer electrolyte, a gel electrolyte, an organic solid electrolyte, or an inorganic solid electrolyte can also be used as the electrolyte 13 without problems.

No particular limitation is imposed on a solvent for a nonaqueous electrolytic solution. Examples of the solvent include chain esters, such as dimethyl carbonate, diethyl carbonate, ethyl methyl carbonate, and methyl propione carbonate; cyclic esters having high dielectric constant, such as ethylene carbonate, propylene carbonate, butylene carbonate, and vinylene carbonate; and mixed solvents of a chain ester and a cyclic ester. A mixed solvent containing a chain ester serving as a main solvent with a cyclic ester is particularly suitable.

In preparation of a nonaqueous electrolytic solution, examples of an electrolyte salt to be dissolved in the above-mentioned solvent include LiClO₄, LiPF₆, LiBF₄, LiAsF₆, LiSbF₆, LiCF₃SO₃, LiC₄F₉SO₃, LiCF₃CO₂, Li₂C₂F₄(SO₃)₂, LiN(RfSO₂)(Rf'SO₂), LiC(RfSO₂)₃, LiCₙF₂ₙ₊₁SO₃(n ≥ 2), and LiN(RfOSO₂)₂ [Rf and Rf are fluoroalkyl groups]. They may be used singly or in combination of two or more species. Among the above-mentioned electrolyte salts, a fluorine-containing organic lithium salt having a carbon number of 2 or greater is particularly preferred. This is because the fluorine-containing organic lithium salt is high in anionic property and readily undergoes ionization, and is thus readily dissolvable in the above-mentioned solvent. No particular limitation is imposed on the concentration of electrolyte salt in a nonaqueous electrolytic solution. However, for example, the concentration is preferably 0.3 mol/L to 1.7 mol/L, more preferably 0.4 mol/L to 1.5 mol/L.

Any anode active material may be used for the negative electrode 14, so long as the material can occlude and release lithium ions. For example, there are used carbonaceous materials, such as graphite, pyrolytic carbon, coke, glassy carbon, a sintered body of organic high polymer compound, mesocarbon microbeads, carbon fiber, and activated carbon. Also, metallic lithium or a lithium-occluding material such as an alloy which contains silicon, tin, indium, or the like; an oxide of silicon, tin, or the like which can perform charge and discharge at low electric potential near that at which lithium does; a nitride of lithium and cobalt such as Li_{2.6}Co_{0.4}N can be used as the anode active material. Further, a portion of graphite can be replaced with a metal which can be alloyed with lithium, or with an oxide. When graphite is used as the anode active material, voltage at full charge can be considered to be about 0.1 V (vs. lithium); thus, the electric potential of the positive electrode 15 can be conveniently calculated as a cell voltage plus 0.1 V. Therefore, since the electric potential of charge of the positive electrode 15 is readily controlled, graphite is preferred.

FIG. 1B is an enlarged sectional view of the positive electrode 15 shown in FIG. 1A. Referring to FIG. 1B, the positive electrode 15 includes a cathode collector 15a and a cathode active material layer 15b. The cathode active material layer 15b is composed of a binder 15b1 and plate-like particles 15b2 for cathode active material.

Since the basic configurations of the lithium secondary battery 10 and the positive electrode 15 (including materials used to form the cell casing 11, the separator 12, the electrolyte 13, the negative electrode 14, the cathode collector 15a, and the binder 15b1) shown in FIGS. 1A and 1B are well known, detailed description thereof is omitted herein.

The plate-like particle 15b2 for cathode active material according to an embodiment of the present invention is a particle which contains cobalt and lithium and has a layered rock salt structure; more particularly, a LiCoO₂ particle, and is formed into a plate-like form having a thickness of about 2 µm to 100 µm.

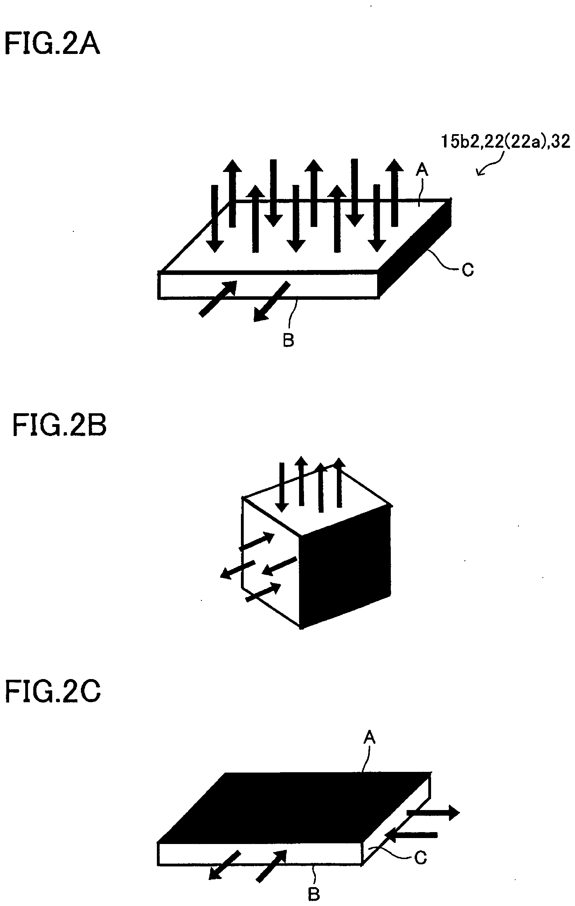

FIG. 2A is an enlarged perspective view of the plate-like particle 15b2 for cathode active material shown in FIG. 1. FIGS. 2B and 2C are enlarged perspective views of cathode active material particles of comparative examples.

As shown in FIG. 2A, the plate-like particle 15b2 for cathode active material is formed such that a plane other than the (003) plane (e.g., the (101) plane or the (104) plane) is exposed at a plate surface (upper surface A and lower surface B: hereinafter, the "upper surface A" and the "lower surface B" are referred to as the "plate surface A" and the "plate surface B," respectively), which is a surface normal to the thickness direction (the vertical direction in the drawings).

That is, the plate-like particle 15b2 for cathode active material is formed such that the plane other than the (003) plane (e.g., the (104) plane) is in parallel with the plate surfaces A and B of the particle. The (003) plane (colored black in the drawing) may be exposed at the end surfaces C, which intersects the plate surface direction (in-plane direction).

By contrast, the particle of a comparative example shown in FIG. 2B is formed into an isotropic shape rather than a thin plate. The particle of a comparative example shown in FIG. 2C is in the form of a thin plate, but is formed such that the (003) planes are exposed at both surfaces (plate surfaces A and B) located in the thickness direction of the particle. The particles of these comparative examples are manufactured by conventional manufacturing methods.

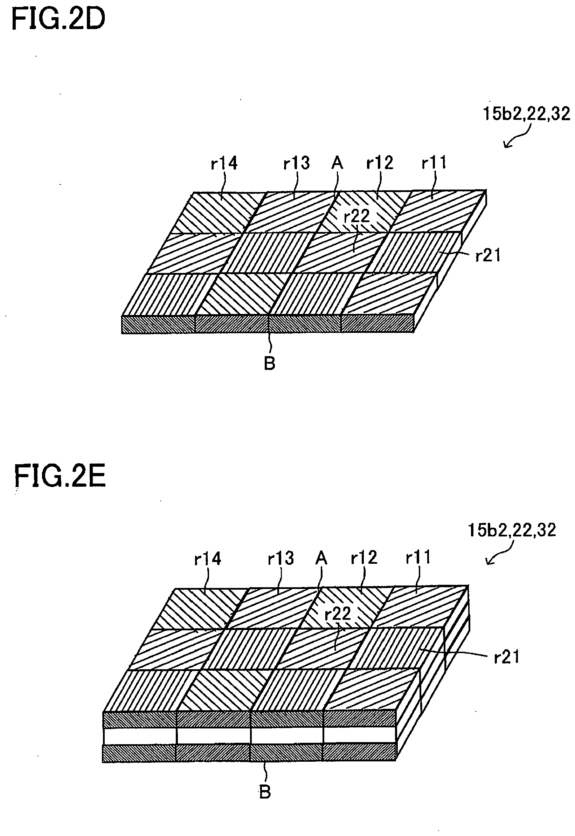

FIGS. 2D and 2E are enlarged perspective views of the plate-like particle 15b2 for cathode active material shown in FIG. 2A. As shown in FIG. 2D, the plate-like particle 15b2 for cathode active material is formed so as to be in so-called "uniaxial orientation."

Specifically, the plate-like particle 15b2 for cathode active material of the present embodiment (see FIG. 2D) is formed such that the particular plane (e.g., the (104) plane) other than the (003) plane through which lithium ions are favorably intercalated and deintercalated is in parallel with the plate surfaces A and B of the particle at all times and such that the other planes face random directions. In other words, the plate-like particle 15b2 for cathode active material has a structure divided into a plurality of regions r11, r12, r13, r14, ..., r21, r22, ...in which, while the above-mentioned particular planes are exposed at the plate surfaces A and B, the other planes face different directions.

In the regions r11, r12, r13, r14, ..., r21, r22, ..., while the [hkl] axes corresponding to the normals to the above-mentioned particular (hkl) planes are oriented in the same direction (the thickness direction; i.e., the vertical direction in the drawing), the [h'k'l'] axes corresponding to the normals to the other (h'k'l') planes are oriented in random directions. That is, the adjacent regions (e.g., r11 an r12) differ in the direction of the [h'k'l'] axis.

The plate-like particle 15b2 for cathode active material shown in FIG. 2A may, in some cases, have a multilayered structure (stacked structure) as shown in FIG. 2E instead of a monolayer structure as shown in FIG. 2D. In this case, at least a surface layer (top layer in the drawing) having the plate surface (upper surface) A and a surface layer (bottom layer in the drawing) having the plate surface (lower surface) B have the above-mentioned structure divided into the regions r11, r12, r13, r14, ..., r21, r22, ... (an intermediate layer between the top layer and the bottom layer in the drawing may be configured similarly; however, in this case, the layers differ in the above-mentioned [hkl] axis).

### <Outline of method for manufacturing plate-like particles for cathode active material>

The plate-like particles 15b2 for cathode active material shown in FIG. 2A are readily and reliably manufactured by the following manufacturing method.

### 1. Preparation of material particles

For synthesizing a cathode active material LiMO₂ having a layered rock salt structure, particles of compounds of Li, Co, Ni, Mn, etc. are appropriately used as particle-form starting materials. Alternatively, a particle-form starting material having a composition of LiMO₂ (synthesized particles) may also be used.

Alternatively, there may be used particles prepared by mixing particles of compounds of Co, Ni, Mn, etc., excluding lithium compound, or particles having a composition of (Co,Ni,Mn)Oₓ. In this case, after a step of sintering a compact, the sintered compact and a lithium compound are reacted with each other, thereby yielding LiMO₂ (details will be described hereinbelow).

For the purpose of accelerating grain growth or compensating volatilization during sintering, a lithium compound may be added in an excess amount of 0.5 mol% to 30 mol%. Alternatively, for the purpose of accelerating grain growth, a low-melting-point oxide, such as bismuth oxide, or low-melting-point glass, such as borosilicate glass, may be added in an amount of 0.001 wt% to 30 wt%.

### 2. Forming step for material particles

Material particles are formed into a sheet-like self-standing compact having a thickness of 100 µm or less. "Self-standing" in "self-standing compact" is synonymous with "independent" in "independent sheet" to be mentioned later. Specifically, the "self-standing compact" is typically a compact which can maintain the form of a sheet-like compact by itself. The "self-standing compact" also encompasses a compact which is formed by affixing or film-forming material particles on a substrate and then separating the resultant compact from the substrate before or after sintering, even though the compact fails to maintain the form of a sheet-like compact by itself.

An employable method for forming a compact is, for example, a doctor blade process using a slurry which contains material particles. Alternatively, a drum drier can be used for formation of a compact; specifically, slurry which contains material is applied onto a heated drum, and then the dried material is scraped off with a scraper. A disk drier can also be used; specifically, slurry is applied onto a heated disk surface, and then the dried material is scraped off with a scraper. Also, hollow granular bodies obtained by appropriately setting conditions of a spray drier can be considered a sheet-like compact having curvature and thus can be preferably used as a compact. Further, an extruding process using a body which contains material particles can be used as a forming method for a compact.

When the doctor blade process is employed, the procedure may be as follows: slurry is applied onto a flexible plate (e.g., an organic polymer plate, such as a PET film); the applied slurry is dried and solidified into a compact; and the compact is separated from the plate, thereby yielding a green compact of plate-like polycrystalline particles. Slurry and body before forming may be prepared as follows: inorganic particles are dispersed in an appropriate dispersion medium, and then binder and plasticizer are added as appropriate. Preferably, slurry is prepared so as to have a viscosity of 500 cP to 4,000 cP and is defoamed under reduced pressure.

The thickness of a compact is preferably 50 µm or less, more preferably 20 µm or less. Preferably, the thickness of the compact is 2 µm or greater. When the thickness is 2 µm or greater, a self-standing sheet-like compact can be readily formed. Since the thickness of the sheet-like compact is substantially equal to the thickness of a plate-like particle, the thickness of the sheet-like compact is set as appropriate according to applications of the plate-like particles.

### 3. Step of sintering a compact

In the sintering step, a compact yielded in the forming step is placed on a setter, for example, as is (in a sheet state), followed by sintering. Alternatively, the sintering step may be performed as follows: the sheet-like compact is cut up or fragmentized as appropriate, and the resultant pieces are placed in a sheath, followed by sintering.

When material particles are unsynthesized mixed particles, in the sintering step, synthesis, sintering, and grain growth occur. In the present invention, since the compact assumes the form of a sheet having a thickness of 100 µm or less, grain growth in the thickness direction is limited. Thus, after grain growth progresses in the thickness direction of the compact until a single crystal grain is completed, grain growth progresses only in in-plane directions of the compact. At this time, particular crystal face which is energetically stable spreads in the sheet surface (plate surface). Thus, there is yielded a film-like sheet (self-standing film) in which particular crystal face is oriented in parallel with the sheet surface (plate surface).

When material particles are of LiMO₂, the (101) and (104) planes, which are crystal faces through which lithium ions are favorably intercalated and deintercalated, can be oriented so as to be exposed at the sheet surface (plate surface). When material particles do not contain lithium (e.g., material particles are of M₃O₄ having a spinel structure), the (h00) planes, which will become the (104) planes when reacting with a lithium compound to thereby yield LiMO₂, can be oriented so as to be exposed at the sheet surface (plate surface).

Preferably, the sintering temperature is 800°C to 1,350°C. When the temperature is lower than 800°C, grain growth becomes insufficient; thus, the degree of orientation becomes low. When the temperature is in excess of 1,350°C, decomposition and volatilization progress. Preferably, the sintering time falls within a range of 1 hour to 50 hours. When the time is shorter than one hour, the degree of orientation becomes low. When the time is longer than 50 hours, energy consumption becomes excessively large. The atmosphere of sintering is set as appropriate such that decomposition during sintering does not progress. In the case where volatilization of lithium progresses, preferably, a lithium atmosphere is established through disposition of lithium carbonate or the like within the same sheath. In the case where release of oxygen and reduction progress during sintering, preferably, sintering is carried out in an atmosphere having high partial pressure of oxygen.

### 4. Crushing step and lithium introduction step

Plate-like particles are yielded as follows: the sintered sheet-like compact is placed on a mesh having a predetermined mesh size, and then a spatula is pressed against the sheet from above, whereby the sheet is crushed into a large number of plate-like particles. The crushing step may be performed after the lithium introduction step.

In the case where a sheet is formed from starting material particles which do not contain a lithium compound, and is then sintered for orientation, or plate-like particles are yielded through crushing of the sheet, the sheet or the plate-like particles are reacted with a lithium compound (lithium nitrate, lithium carbonate, etc.), thereby yielding a cathode active material film in which a crystal face of good intercalation and deintercalation is oriented so as to be exposed at the plate surface. For example, lithium is introduced by sprinkling lithium nitrate over the oriented sheet or particles such that the mole ratio between Li and M, Li/M, is 1 or higher, followed by heat treatment. Preferably, the heat treatment temperature is 600°C to 800°C. When the temperature is lower than 600°C, the reaction does not progress sufficiently. When the temperature is higher than 800°C, orientation deteriorates.

Next, the outline of a typical method for manufacturing LiCoO₂ particles will be described.

### <<Sheet formation step>>

A green sheet which contains Co₃O₄ and Bi₂O₃ and has a thickness of 20 µm or less is formed. The green sheet is sintered at a temperature falling within a range of 900°C to 1,300°C for a predetermined time, thereby yielding an independent film-like sheet ("independent sheet" is synonymous with the aforementioned "self-standing film") in which the (h00) planes are oriented in parallel with the plate surface (the orientation may be referred to merely as "(h00) orientation") and which is composed of a large number of plate-like Co₃O₄ particles. In the course of the sintering, bismuth is removed from the sheet through volatilization, and Co₃O₄ is phase-transformed to CoO through reduction.

The "independent" sheet refers to a sheet which, after sintering, can be handled by itself independent of the other support member. That is, the "independent" sheet does not include a sheet which is fixedly attached to another support member (substrate or the like) through sintering and is thus integral with the support member (unseparable or difficult to be separated).

In the thus-formed green sheet in the form of a film, the amount of material present in the thickness direction is very small as compared with that in a particle plate surface direction; i.e., in an in-plane direction (a direction orthogonal to the thickness direction).

Thus, at the initial stage at which a plurality of particles are present in the thickness direction, grain growth progresses in random directions. As the material in the thickness direction is consumed with progress of grain growth, the direction of grain growth is limited to two-dimensional directions within the plane. Accordingly, grain growth in planar directions is reliably accelerated.

Particularly, by means of forming the green sheet to the smallest possible thickness (e.g., several µm or less) or accelerating grain growth to the greatest possible extent despite a relatively large thickness of about 100 µm (e.g., about 20 µm), grain growth in planar directions is more reliably accelerated.

At this time, only those particles whose crystal faces having the lowest surface energy are present within the plane of the green sheet selectively undergo in-plane flat (plate-like) grain growth. As a result, sintering the sheet yields plate-like crystal grains of CoO which have high aspect ratio and in which particular crystal faces (herein, the (h00) planes) are oriented in parallel with the plate surfaces of the grains.

In the process of temperature lowering, CoO is oxidized into Co₃O₄. At this time, the orientation of CoO is transferred, thereby yielding plate-like crystal grains of Co₃O₄ in which particular crystal faces (herein, the (h00) planes) are oriented in parallel with the plate surfaces of the grains.

In the oxidation from CoO to Co₃O₄, the degree of orientation is apt to deteriorate for the following reason: since CoO and Co₃O₄ differ greatly in crystal structure and Co-O interatomic distance, oxidation; i.e., insertion of oxygen atoms, is apt to be accompanied by a disturbance of crystal structure. Thus, preferably, conditions are selected as appropriate so as to avoid deterioration in the degree of orientation to the greatest possible extent. For example, reducing the temperature-lowering rate, holding at a predetermined temperature, and reducing the partial pressure of oxygen are preferred.

Thus, sintering such a green sheet yields a self-standing film formed as follows: a large number of thin plate-like grains in which particular crystal faces are oriented in parallel with the plate surfaces of the grains are joined together at grain boundaries in planar directions (refer to Japanese Patent Application No. 2007-283184 filed by the applicant of the present invention). That is, there is formed a self-standing film in which the number of crystal grains in the thickness direction is substantially one. The meaning of "the number of crystal grains in the thickness direction is substantially one" does not exclude a state in which portions (e.g., end portions) of in-plane adjacent crystal grains overlie each other in the thickness direction. The self-standing film can become a dense ceramic sheet in which a large number of thin plate-like grains as mentioned above are joined together without clearance therebetween.

### «Crushing step»

The film-like sheet (self-standing sheet) yielded in the above-mentioned sheet formation step is in such a state that the sheet is apt to break at grain boundaries. Thus, the film-like sheet yielded in the above-mentioned sheet formation step is placed on a mesh having a predetermined mesh size, and then a spatula is pressed against the sheet from above, whereby the sheet is crushed into a large number of Co₃O₄ particles.

### <<Lithium introduction step>>

The (h00)-oriented (the meaning of "(h00) orientation" is mentioned above) Co₃O₄ particles yielded in the above-mentioned crushing step and Li₂CO₃ are mixed. The resultant mixture is heated for a predetermined time, whereby lithium is introduced into the Co₃O₄ particles. Thus, there is yielded (104)-oriented LiCoO₂; i.e., the plate-like particles 15b2 for cathode active material.

In addition to lithium carbonate, there can be used as a lithium source for lithium introduction, for example, various lithium salts, such as lithium nitrate, lithium acetate, lithium chloride, lithium oxalate, and lithium citrate; and lithium alkoxides, such as lithium methoxide and lithium ethoxide.

For enhancement of orientation of LiCoO₂ particles, conditions in lithium introduction; specifically, mixing ratio, heating temperature, heating time, atmosphere, etc., must be set as appropriate in consideration of melting point, decomposition temperature, reactivity, etc. of a material to be used as a lithium source.

For example, when the mixture of (h00)-oriented Co₃O₄ particles and a lithium source react with each other in a very active state, the orientation of Co₃O₄ particles may be disturbed, which is undesirable. The active state means, for example, the following state: the lithium source becomes excessive in amount and becomes a liquid state, and not only are intercalated lithium ions into crystals of Co₃O₄ particles, but also Co₃O₄ particles are dissolved and re-precipitated in the liquid of the lithium source.

The crushing step may be carried out after the lithium introduction step.

### <Specific examples>

Next will be described in detail specific examples of the above-mentioned manufacturing method, and the results of evaluation of particles manufactured by the specific example methods.

### [Example 1]

### <<Manufacturing method>>

A slurry was prepared by the following method: A Co₃O₄ powder (particle size: 1 µm to 5 µm; product of Seido Chemical Industry Co., Ltd.) was pulverized, yielding Co₃O₄ particles (particle size: 0.3 µm); Bi₂O₃ (particle size: 0.3 µm; product of Taiyo Koko Co., Ltd.) was added in an amount of 20 wt.% to the Co₃O₄ particles; and the resultant mixture (100 parts by weight), a dispersion medium (toluene : isopropanol = 1 : 1)(100 parts by weight), a binder (polyvinyl butyral: product No. BM-2; product of Sekisui Chemical Co. Ltd.)(10 parts by weight), a plasticizer (DOP: Di (2-ethylhexyl) phthalate; product of Kurogane Kasei Co., Ltd.)(4 parts by weight), and a dispersant (product name RHEODOL SP-O30, product of Kao Corp.)(2 parts by weight) were mixed. The resultant mixture was stirred under reduced pressure for defoaming and was prepared to a viscosity of 500 cP to 700 cP. The viscosity was measured by means of an LVT-type viscometer, a product of Brookfield Co., Ltd.

The thus-prepared slurry was formed into a sheet on a PET film by the doctor blade process such that the thickness of the sheet was 2 µm as measured after drying.

A 70 mm square piece was cut out from the sheet-like compact separated from the PET film by means of a cutter; the piece was placed at the center of a setter (dimensions: 90 mm square × 1 mm high) made of zirconia and embossed in such a manner as to have a protrusion size of 300 µm; sintering was performed at 1,150°C for 5 hours; temperature was lowered at a rate of 50°C/h; and a portion of the piece which was not fused to the setter was taken out.

The ceramic sheet which was yielded through sintering was placed on a mesh having an opening diameter of 100 µm, and then a spatula was lightly pressed against the ceramic sheet so as to cause the ceramic sheet to pass through the mesh, thereby crushing the ceramic sheet.

A Co₃O₄ powder yielded through crushing of the ceramic sheet and an Li₂CO₃ powder (product of Kanto Chemical Co., Inc.) were mixed at a ratio Li/Co of 1.0. The resultant mixture was thermally treated within a crucible at 750°C for 3 hours, thereby yielding powdery LiCoO₂.

### <<Results of evaluation>>

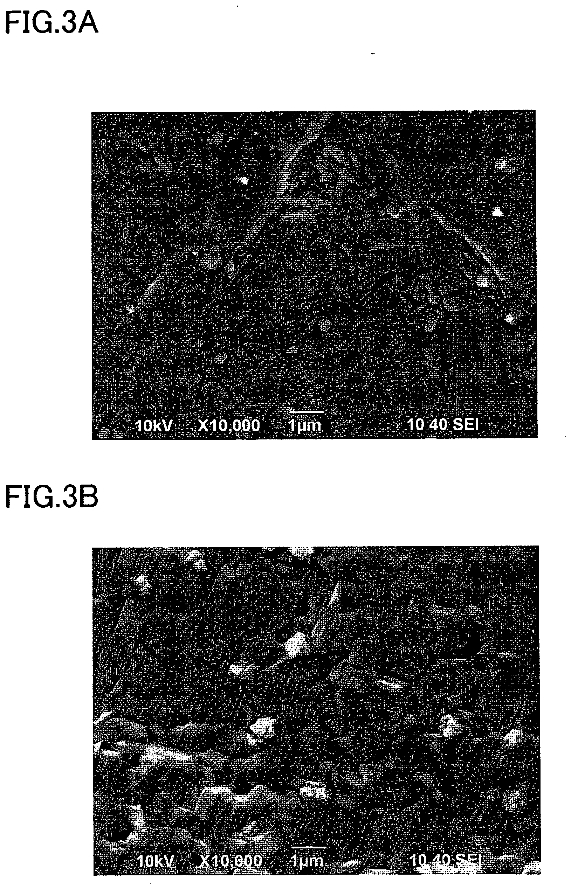

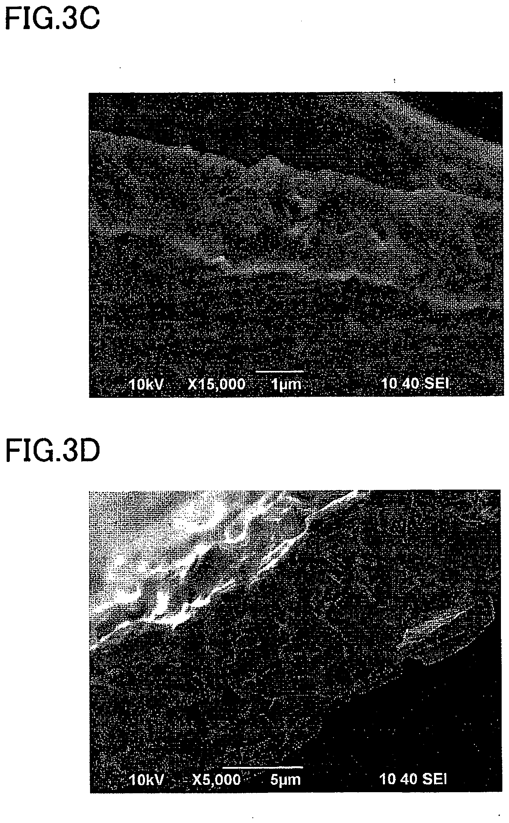

FIG. 3A is a scanning electron micrograph showing the surface (plate surface) of an (h00)-oriented Co₃O₄ particle yielded by the sheet formation step in the manufacturing method of the present invention (the above-mentioned specific example). FIG. 3B is a scanning electron micrograph showing the surface (plate surface) of an LiCoO₂ particle yielded (having undergone the lithium introduction step) by the manufacturing method of the present invention (the above-mentioned specific example). FIG. 3C is a scanning electron micrograph showing the cross section (end surface) of an LiCoO₂ particle yielded (having undergone the lithium introduction step) by the manufacturing method of the present invention (the above-mentioned specific example).

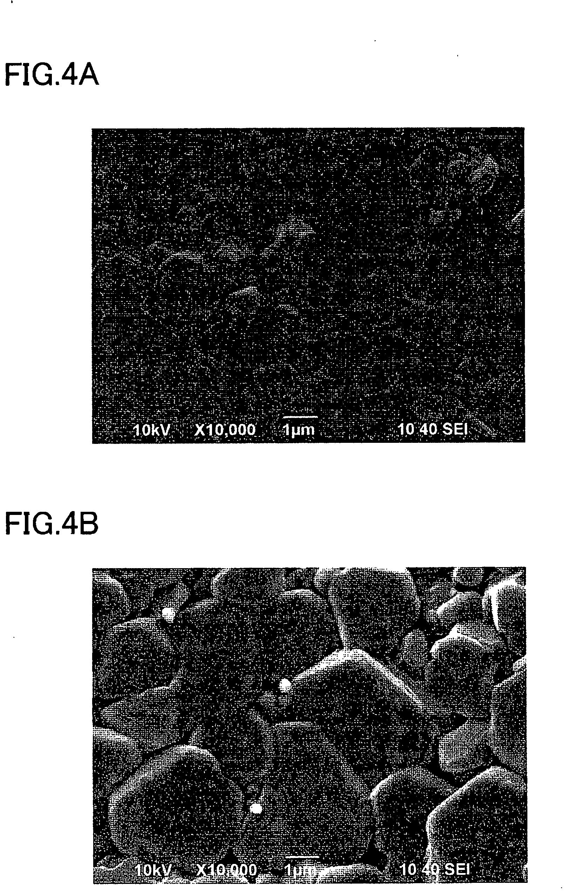

Meanwhile, FIG. 4A is a scanning electron micrograph showing an ordinary (111)-oriented Co₃O₄ particle (comparative example), the surface energy of the (111) plane being the lowest. FIG. 4B is a scanning electron micrograph showing an LiCoO₂ particle of the comparative example yielded through the above-mentioned lithium introduction step being performed on the ordinary Co₃O₄ particle (comparative example) shown in FIG. 4A.

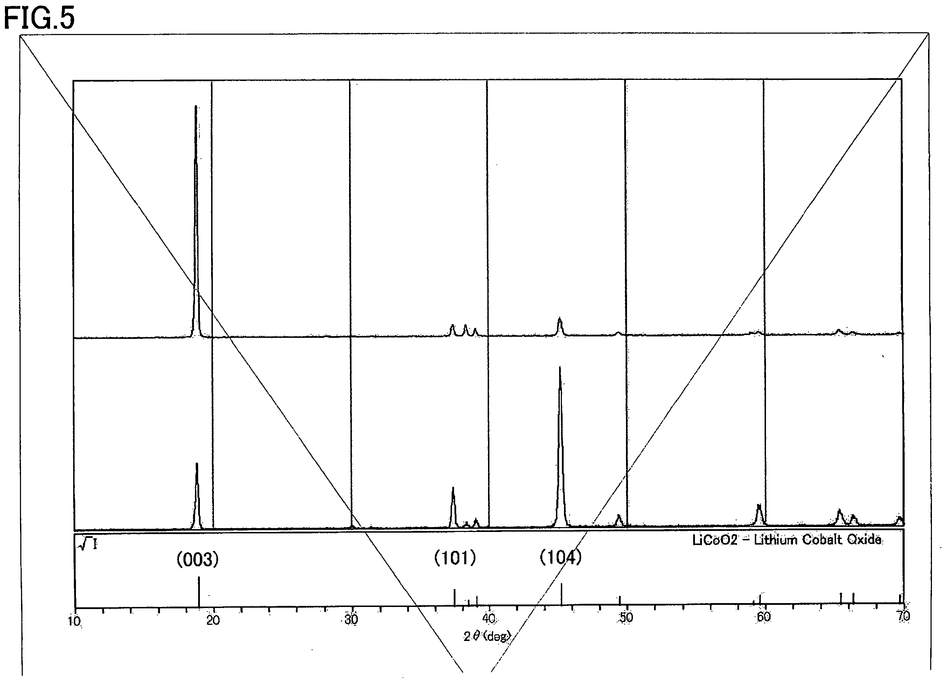

FIG. 5 is a diagram showing X-ray diffraction profiles of the LiCoO₂ particles shown in FIGS. 3B and 4B (the upper profile corresponds to the comparative example of FIG. 4B, and the lower profile corresponds to the specific example of FIG. 3B). X-ray diffraction measurement will be described later. FIG. 5 shows a profile of diffraction by crystal faces present in parallel with the plate surface of a particle; i.e., crystal faces oriented in a plate surface direction of a particle.

The Co₃O₄ particle of the comparative example (see FIG. 4A) apparently shows a (111) orientation. Performing the lithium introduction step on the particle of the comparative example resulted in the (003)-oriented LiCoO₂ particle, in which the (003) planes were exposed at the plate surfaces A and B (see FIGS. 2C, 4B, and 5; as is apparent from FIG. 4B, the flat (003) planes are exposed at the plate surface A of FIG. 2C at a very high percentage).

By contrast, according to the manufacturing method of the present invention (the above-mentioned specific example), the Co₃O₄ particle which is (h00)-oriented, not (111)-oriented, is subjected to the lithium introduction step, thereby yielding the (104)-oriented LiCoO₂ particle, in which the (104) planes are exposed at the plate surfaces A and B, lithium ions being readily released from the (104) planes (see FIGS. 2A, 3B, and 5; as is apparent from FIG. 3B, in contrast to FIG. 4B, fine streaks appear on the surface of the particle).

As is apparent from FIG. 3B, at the plate surface of a plate-like particle, a plurality of regions are numerously arrayed two-dimensionally as viewed in plane. The particle is in the above-mentioned "uniaxial orientation." That is, in the plate-like particle shown in FIG. 3B, a plurality of regions in which, while those planes from which lithium ions are readily released are exposed at the plate surface, other planes face different directions, are numerously arrayed two-dimensionally as viewed in plane. A method for confirming this state will be described later.

FIG. 3D is a scanning electron micrograph showing the cross section of a LiCoO₂ yielded by a process similar to that of the above-mentioned specific example except for a slurry viscosity of 4,000 cP, a sheet thickness of 10 µm as measured after drying, and a sintering temperature of 1,300°C. As shown in FIG. 3D, the surface and sectional properties of the particle yielded by the method of the present example are similar to those shown in FIG. 3C. Thus, the present example also yielded the (104)-oriented LiCoO₂ particle as in the case of the above-mentioned specific example.

### [Example 2]

### <<Manufacturing method>>

A slurry having a viscosity of 4,000 cP was prepared from a material and through a method similar to those mentioned above. The thus-prepared slurry was formed into a sheet on a PET film by the doctor blade process such that the thickness of the sheet was 10 µm as measured after drying.

A 70 mm square piece was cut out from the sheet-like compact separated from the PET film by means of a cutter; the piece was placed at the center of a setter (dimensions: 90 mm square × 1 mm high) made of zirconia and embossed in such a manner as to have a protrusion size of 300 µm; and after sintering and the lowering of temperature were carried out (conditions of the sintering and lowering of temperature will be described later), a portion of the piece which was not fused to the setter was taken out.

An LiNO₃ powder (product of Kanto Chemical Co., Inc.) was sprinkled over the thus-yielded Co₃O₄ ceramic sheet such that the ratio Li/Co became 1.0. The thus-prepared ceramic sheet was thermally treated within a crucible at 750°C for 3 hours, thereby yielding an LiCoO₂ ceramic sheet (film) having a thickness of 10 µm.

The LiCoO₂ ceramic sheet was placed on a polyester mesh having an average opening diameter of 100 µm, and then a spatula was lightly pressed against the ceramic sheet so as to cause the ceramic sheet to pass through the mesh, thereby crushing the ceramic sheet into powdery LiCoO₂.

### <<Evaluation>>

XRD (X-ray diffraction) measurement was carried out by the following method: a mixture prepared by adding plate-like particles (0.1 g) to ethanol (2 g) was subjected to dispersion for 30 minutes by means of an ultrasonic dispersing device (ultrasonic cleaner); and the resultant dispersion liquid was spin-coated at 2,000 rpm onto a glass substrate measuring 25 mm × 50 mm so as to prevent overlap of the plate-like particles to the greatest possible extent and to bring crystal faces in parallel with the glass substrate surface. By means of an XRD apparatus (GEIGER FLEX RAD-IB, product of Rigaku Corp.), the surfaces of the plate-like particles were irradiated with X-ray so as to measure an XRD profile, thereby obtaining the ratio of intensity (peak height) of diffraction by the (003) plane to intensity (peak height) of diffraction by the (104) plane, [003]/[104]. In the above-mentioned method, the plate surface of the plate-like particles are in surface contact with the glass substrate surface, so that the particle plate surface is in parallel with the glass substrate surface. Thus, according to the above-mentioned method, there is obtained a profile of diffraction by crystal faces present in parallel with crystal faces of the particle plate surface; i.e., a profile of diffraction by crystal faces oriented in a plate surface direction of a particle.

In order to evaluate cell characteristics, a cell was fabricated in the following manner.

The yielded LiCoO₂ particles, acetylene black, and polyvinylidene fluoride (PVDF) were mixed at a mass ratio of 75 : 20 : 5, thereby preparing a positive-electrode material. The prepared positive-electrode material (0.02 g) was compacted to a disk having a diameter of 20 mm under a pressure of 300 kg/cm², thereby yielding a positive electrode.

The yielded positive electrode, a negative electrode formed from a lithium metal plate, stainless steel collector plates, and a separator were arranged in the order of collector plate-positive electrode-separator-negative electrode-collector plate. The resultant laminate was filled with an electrolytic solution, thereby yielding a coin cell. The electrolytic solution was prepared as follows: ethylene carbonate (EC) and diethyl carbonate (DEC) were mixed at a volume ratio of 1:1 so as to prepare an organic solvent, and LiPF₆ was dissolved in the organic solvent at a concentration of 1 mol/L.

The thus-fabricated coin cell was evaluated for cell capacity (discharge capacity) and capacity retention percentage.

One cycle consists of the following charge and discharge operations: constant-current charge is carried out at 0.1C rate of current until the cell voltage becomes 4.2 V; subsequently, constant-voltage charge is carried out under a current condition of maintaining the cell voltage at 4.2 V, until the current drops to 1/20, followed by 10 minutes rest; and then, constant-current discharge is carried out at 1C rate of current until the cell voltage becomes 3.0 V, followed by 10 minutes rest. A total of three cycles were repeated under a condition of 25°C. The discharge capacity in the third cycle was measured.

The fabricated cell was subjected to cyclic charge-discharge at a test temperature of 25°C. The cyclic charge-discharge repeats: (1) charge at 1C rate of constant current and constant voltage until 4.2 V is reached, and (2) discharge at 1C rate of constant current until 3.0 V is reached. The capacity retention percentage (%) was defined as a value obtained by dividing the discharge capacity of the cell as measured after 100 charge-discharge cycles by the initial discharge capacity of the cell.

The following Table 1 shows the results of evaluation of seven experimental examples (Comparative Examples 1 and 2 and Experimental Examples 1 to 5) which were rendered different in the degree of orientation by means of changing the amount of addition of Bi₂O₃, a sintering condition, and a temperature-lowering condition.

**[Table 1]**

| | Bi₂O₃ additive amount [wt.%] | Sintering temp. [°C] | Temp. lowering rate [°C/h] | [003]/[104] peak intensity ratio | Discharge capacity [mAh/g] | Capacity retention percentage [%] |
|---|---|---|---|---|---|---|
| Comp. Ex. 1 | 20 | 1100 | 100 | 1.2 | 70 | 97 |
| Exp. Ex. 1 | 20 | 1125 | 100 | 0.9 | 100 | 97 |
| Exp. Ex. 2 | 20 | 1150 | 100 | 0.7 | 115 | 96 |
| Exp. Ex. 3 | 20 | 1200 | 50 | 0.3 | 120 | 95 |
| Exp. Ex. 4 | 20 | 1250 | 50 | 0.07 | 120 | 95 |
| Exp. Ex. 5 | 22.5 | 1300 | 10 | 0.005 | 120 | 91 |
| Comp. Ex. 2 | 22.5 | 1350 | 10 | 0.003 | 120 | 86 |

As shown in Table 1, in the present specific examples, even though the plate-like particle 15b2 for cathode active material has a relatively large particle size, a large discharge capacity (rate characteristic) of 100 mAh/g or greater is realized at a high rate of 1C.

Also, by virtue of a peak intensity ratio [003]/[104] of 1.0 or less (0.9 or less), deintercalation of lithium ions is facilitated, so that the cell capacity (discharge capacity) at high rate is greatly improved. However, at a peak intensity ratio less than 0.005, the capacity retention percentage (cycle characteristic) deteriorates. Conceivably, this is because, when the degree of orientation becomes excessively high (i.e., crystals are oriented to an excessively high degree), a change in the volume of crystal associated with intercalation and deintercalation of lithium ions causes the particles to be apt to break (the specifics of the reason for the deterioration in cycle characteristic are not clear).

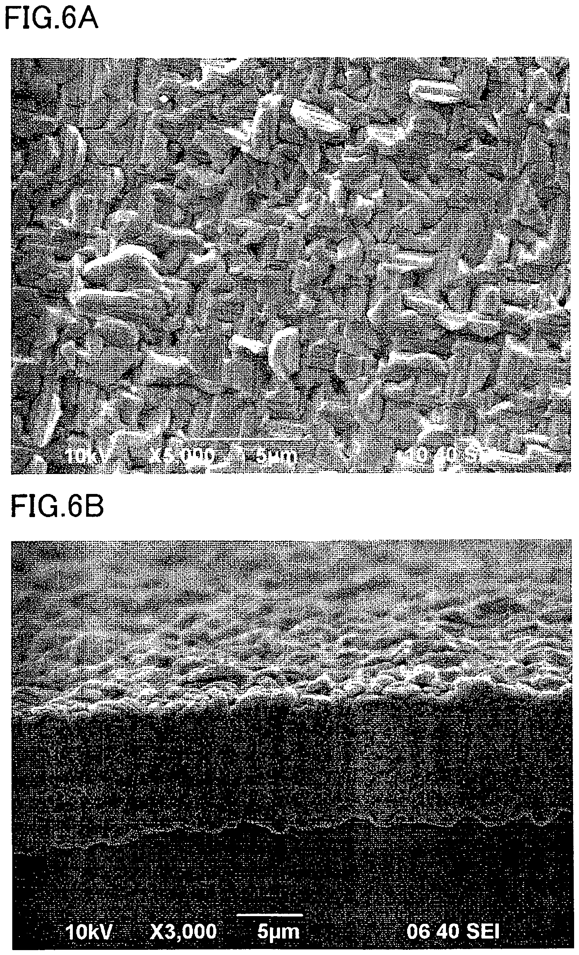

FIG. 6A is a scanning electron micrograph showing the surface (plate surface) of an LiCoO₂ particle in Experimental Example 3. FIG. 6B is a scanning electron micrograph showing the cross section (chemically polished) of the LiCoO₂ particle in Experimental Example 3.

As is apparent from FIG. 6A, at the plate surface of a plate-like particle of Experimental Example 3, a plurality of regions are numerously arrayed two-dimensionally as viewed in plane. It can be confirmed by one of two methods described below that the particle is in the above-mentioned "uniaxial orientation." That is, the particle is formed as follows: a plurality of regions in which, while those planes from which lithium ions are readily released are exposed at the plate surface, other planes face different directions, are numerously arrayed two-dimensionally as viewed in plane.

One or two of opposite plate surfaces of the plate-like particle of Experimental Example 3 were sliced off by means of FIB (focused ion beam) to obtain a piece(s) having a thickness of about 80 nm. The plate surface of the piece(s) was observed through a transmission electron microscope. In the selected-area electron diffraction image, 10 or more portions having the [104] axis oriented perpendicular to the plate surface were observed, and it was confirmed that, at these portions, orientation within the plate surface was randomized.

The plate-like particles of Experimental Example 3 were placed on a slide glass substrate in such a manner as to not overlap one another and such that the particle plate surfaces were in surface contact with the plate surface of the glass substrate. Specifically, a mixture prepared by adding plate-like particles (0.1 g) to ethanol (2 g) was subjected to dispersion for 30 minutes by means of an ultrasonic dispersing device (ultrasonic cleaner); and the resultant dispersion liquid was spin-coated at 2,000 rpm onto the glass substrate measuring 25 mm × 50 mm so as to place the plate-like particles on the glass substrate. Then, the particles placed on the glass substrate were transferred to an adhesive tape. The resultant tape was embedded in resin, followed by polishing for enabling observation of the polished cross-sectional surface of a plate-like particle. Finish polishing was carried out by means of a vibrating rotary polisher using colloidal silica (0.05 µm) as abrasive. The thus-prepared sample was subjected to crystal orientation analysis of the cross section of a single particle by an electron backscattered diffraction image process (EBSD). It was confirmed from the analysis that the particle plate surface was divided into a plurality of regions in which the [104] axes are perpendicular to the plate surface (i.e., the (104) planes are oriented along the plate surface), whereas crystal axes other than the [104] axes (crystal axes intersecting with the [104] axes) are oriented in random directions.

As shown in FIG. 6B, the particle has a very dense structure. Porosity as measured from the results of image processing of images obtained through a scanning electron microscope was less than 10%.

### <Effects of the embodiment>

Thus, in the plate-like particle 15b2 for cathode active material; i.e., the plate-like particle of LiCoO₂, manufactured by the manufacturing method of the present invention (the above-mentioned specific examples), the (104) planes, through which lithium ions are favorably intercalated and deintercalated, are oriented in parallel with the plate surface of the plate-like particle and are exposed at most of the surface of the plate-like particle. Meanwhile, the (003) planes, through which lithium ions cannot be intercalated and deintercalated, are merely slightly exposed at end surfaces of the plate-like particle (see FIG. 2A). That is, to the electrolyte 13 (including that infiltrating into the binder 15b1), the planes, through which lithium ions are favorably intercalated into and deintercalated ,are exposed to a greater extent, whereas the (003) planes, through which lithium ions cannot be intercalated and deintercalated, are exposed to a very small extent. In the example of FIG. 2A, the (003) planes are exposed at the end surface C in the form of a plane. However, other structures can be implemented. For example, there can be formed a structure in which the (003) planes and other planes (the (104) planes, etc.) form a step-like form (see FIG. 3C).

In ordinary LiCoO₂ particles (as shown in FIGS. 2B and 2C), reducing the particle size enhances rate characteristic because of an increase in specific surface, but is accompanied by a deterioration in durability due to a deterioration in particle strength, and a reduction in capacity due to an increase in the percentage of a binder. In this manner, in ordinary (conventional) LiCoO₂ particles, the rate characteristic is in trade-off relation with durability and capacity.

By contrast, in the LiCoO₂ plate-like particles of the present invention, when durability and capacity are enhanced through an increase in particle size, the total area of those planes through which lithium ions are readily released also increases, so that high rate characteristic is obtained. Thus, according to the present invention, capacity, durability, and rate characteristic can be enhanced as compared with conventional counterparts.

Particularly, a lithium ion secondary cell for use in mobile equipment, such as cellphones and notebook-style PCs, is required to provide high capacity for long hours of use. For implementation of high capacity, increasing the filling rate of an active material powder is effective, and the use of large particles having a particle size of 10 µm or greater is preferred in view of good filling performance.

In this regard, according to conventional techniques, an attempt to increase the particle size to 10 µm or greater leads to a plate-like particle in which the (003) planes, through which lithium ions and electrons cannot be intercalated and deintercalated, are exposed at a wide portion of the plate surface of the plate-like particle (see FIG. 2C) for the reason of crystal structure, potentially having an adverse effect on output characteristics.

By contrast, in the LiCoO₂ plate-like particle of the present invention, conductive planes for lithium ions and electrons are widely exposed at the surface of the plate-like particle. Thus, according to the present invention, the particle size of the LiCoO₂ plate-like particles can be increased without involvement of adverse effect on output characteristics. Therefore, the present invention can provide a positive-electrode material sheet having high capacity and a filling rate higher than that of a conventional counterpart.

The plate-like particle 15b2 for cathode active material, a cathode active material layer 22, and a cathode active material layer 32 have a thickness of preferably 2 µm to 100 µm, more preferably 5 µm to 50 µm, further preferably 5 µm to 20 µm. A thickness in excess of 100 µm is unpreferable in view of deterioration in rate characteristic, and sheet formability. The thickness of the plate-like particle 15b2 for cathode active material is desirably 2 µm or greater. A thickness less than 2 µm is unpreferable in view of the effect of increasing the filling rate being small.

The aspect ratio of the plate-like particle 15b2 for cathode active material is desirably 4 to 20. At an aspect ratio less than 4, the effect of expanding a lithium ion intercalation/deintercalation surface through orientation becomes small. At an aspect ratio in excess of 20, when the plate-like particles 15b2 for cathode active material are filled into the cathode active material layer 15b such that the plate surfaces of the plate-like particles 15b2 for cathode active material are in parallel with an in-plane direction of the cathode active material layer 15b, a lithium ion diffusion path in the thickness direction of the cathode active material layer 15b becomes long, resulting in a deterioration in rate characteristic; thus, the aspect ratio is unpreferable.

### <Modifications>

The above-described embodiment and specific examples are, as mentioned above, mere examples of the best mode of the present invention which the applicant of the present invention contemplated at the time of filing the present application. The above-described embodiment and specific examples should not be construed as limiting the invention. Various modifications to the above-described embodiment and specific examples are possible, so long as the invention is not modified in essence.

Several modifications will next be exemplified. In the following description of the modifications, component members similar in structure and function to those of the above-described embodiment are denoted by names and reference numerals similar to those of the above-described embodiment. The description of the component members appearing in the above description of the embodiment can be applied as appropriate, so long as no inconsistencies are involved.

Needless to say, even modifications are not limited to those described below. Limitingly construing the present invention based on the above-described embodiment and the following modifications impairs the interests of an applicant (particularly, an applicant who is motivated to file as quickly as possible under the first-to-file system) while unfairly benefiting imitators, and is thus impermissible.

The structure of the above-described embodiment and the structures of the modifications to be described below are entirely or partially applicable in appropriate combination, so long as no technical inconsistencies are involved.
(1) The present invention is not limited to the structure which is specifically disclosed in the description of the above embodiment.
(1-1) For example, the cathode active material layer 15b shown in FIG. 1B may be a self-standing-film-like LiCoO₂ ceramic sheet (cathode active material film).

### [Example 3]

### <<Manufacturing method>>

An independent film-like LiCoO₂ ceramic sheet (self-standing sheet) having a thickness of 10 µm was prepared from a material and through a method similar to those of Example 2 described above. As mentioned above, in the present example, crushing by means of a mesh was not carried out.

### <<Evaluation>>

XRD (X-ray diffraction) measurement was carried out by the following method: a self-standing film having a diameter of about 16 mm was placed on a glass substrate such that the film surface was in parallel with the glass substrate surface; and by means of the aforementioned XRD apparatus, the film surface was irradiated with X-ray so as to measure an XRD profile, thereby obtaining the ratio of intensity of diffraction by the (003) plane to intensity of diffraction by the (104) plane, [003]/[104].

In order to evaluate cell characteristics, a cell was fabricated in the following manner.

Au was deposited, by sputtering, on one side of the self-standing film having a diameter of about 16 mm so as to form a current collection layer (thickness: 500 angstroms), thereby yielding a positive electrode. The yielded positive electrode, a negative electrode formed from a lithium metal plate, stainless steel collector plates, and a separator were arranged in the order of collector plate-positive electrode-separator-negative electrode-collector plate. The resultant laminate was filled with an electrolytic solution similar to that mentioned above, thereby yielding a coin cell.

The following Table 2 shows the results of evaluation of seven experimental examples (Comparative Examples 3 and 4 and Experimental Examples 6 to 10) which were rendered different in the degree of orientation by means of changing the amount of addition of Bi₂O₃, a sintering condition, and a temperature-lowering condition.

**[Table 2]**

| | Bi₂O₃ additive amount [wt.%] | Sintering temp. [°C] | Temp. lowering rate [°C/h] | [003]/[104] peak intensity ratio | Discharge capacity [mAh/g] | Capacity retention percentage [%] |
|---|---|---|---|---|---|---|
| Comp. Ex. 3 | 20 | 1100 | 100 | 1.2 | 50 | 97 |
| Exp. Ex. 6 | 20 | 1125 | 100 | 0.9 | 90 | 97 |
| Exp. Ex. 7 | 20 | 1150 | 100 | 0.7 | 100 | 97 |
| Exp. Ex. 8 | 20 | 1200 | 50 | 0.3 | 105 | 96 |
| Exp. Ex. 9 | 20 | 1250 | 50 | 0.07 | 110 | 96 |
| Exp. Ex. 10 | 22.5 | 1300 | 10 | 0.005 | 110 | 94 |
| Comp. Ex. 4 | 22.5 | 1350 | 10 | 0.003 | 110 | 88 |

As shown in Table 2, the positive electrodes using the self-standing film-like cathode active material yielded results similar to those appearing in Table 1 mentioned above.
(1-2) A gel polymer electrolyte can be used.

### [Example 4]

Au was deposited, through sputtering of Au particles, on one side of a self-standing film having a diameter of 16 mm so as to form a current collection layer (thickness: 500 angstroms), thereby yielding a positive electrode. Polyethylene oxide (PEO) was dissolved in an organic electrolytic solution through application of heat; and nonwoven fabric of polypropylene, which serves as a structural reinforcement, was impregnated with the resultant solution, followed by cooling to form a gel electrolyte layer.

The yielded positive electrode, the yielded gel electrolyte layer, a negative electrode formed from a lithium metal plate, and stainless steel collector plates were arranged in the order of collector plate-positive electrode-gel electrolyte layer-negative electrode-collector plate. The resultant laminate was filled with the above-mentioned electrolytic solution, thereby yielding a coin cell.

The thus-yielded coin cells were evaluated for cell capacity and capacity retention percentage and exhibited tendencies similar to those of Table 2 mentioned above.
(1-3) Material used to form the plate-like particle for cathode active material and the cathode active material film of the present invention is not limited to lithium cobaltate, so long as the material has a layered rock salt structure. For example, the plate-like particle for cathode active material and the cathode active material film of the present invention can be formed from a solid solution which contains nickel, manganese, etc., in addition to cobalt. Specific examples of such a solid solution include lithium nickelate, lithium manganate, lithium nickelate manganate, lithium nickelate cobaltate, lithium cobaltate nickelate manganate, and lithium cobaltate manganate. These materials may contain one or more elements of Mg, Al, Si, Ca, Ti, V, Cr, Fe, Cu, Zn, Ga, Ge, Sr, Y, Zr, Nb, Mo, Ag, Sn, Sb, Te, Ba, Bi, etc.

At a temperature of 920°C or higher, an oxide of Co is phase-transformed from a spinel structure represented by Co₃O₄ at room temperature to a rock salt structure represented by CoO. Meanwhile, Mn and Ni assume a spinel structure represented by Mn₃O₄ and a rock salt structure represented by NiO, respectively, over a wide range of temperature.

Thus, as in the case of Co, a solid solution which contains at least two of Co, Ni, and Mn can be phase-transformed from a spinel structure at low temperature to a rock salt structure at high temperature through control of composition, temperature, atmosphere, pressure, etc.

In this case, there can be yielded, by the following procedure, an LiMO₂ sheet or plate-like particles for cathode active material in which the crystal face, such as (104) and (101), through which lithium ions are favorably intercalated and deintercalated, is oriented in parallel with the plate surface: an independent film-like sheet composed of a large number of (h00)-oriented plate-like M₃O₄ (M includes at least one selected from among Co, Ni, and Mn) grains is formed, and then lithium is introduced into the sheet or pieces obtained by crushing the sheet.

That is, for example, even an Ni-Mn composite oxide, which does not contain Co, assumes a rock salt structure at high temperature and a spinel structure at low temperature as in the case of a Co oxide; thus, the Ni-Mn composite oxide can be used to form an oriented sheet in a manner similar to that mentioned above. By introducing lithium into the thus-formed sheet or pieces obtained by crushing the sheet, there can be manufactured a favorably oriented cathode active material represented by Li(Ni,Mn)O₂.

Alternatively, there can be yielded, by the following procedure, an LiMO₂ sheet or plate-like particles for cathode active material in which the crystal face, such as (104) or (101), through which lithium ions are favorably intercalated and deintercalated, is oriented in parallel with the plate surface: an independent film-like sheet composed of a large number of (h00)-oriented plate-like MO (M includes at least one selected from among Co, Ni, and Mn) grains having a rock salt structure is formed, and then lithium is introduced into the sheet or pieces obtained by crushing the sheet.

Alternatively, an LiMO₂ sheet or plate-like particles for cathode active material in which the crystal face, such as (104) and (101), through which lithium ions are favorably intercalated and deintercalated, is oriented in parallel with the plate surface, can be yielded directly by means of controlling composition, temperature, atmosphere, pressure, additive, etc. when a film-like sheet composed of LiMO₂ (M includes at least one selected from among Co, Ni, and Mn) particles is sintered.

Also, in a cathode active material having an olivine structure as typified by LiFePO₄, b-axis direction ([010] direction) is regarded as the direction of lithium ion conduction. Thus, by means of forming plate-like particles or a film in which ac plane (e.g., the (010) plane) is oriented in parallel with the plate surface, a cathode active material having good performance can be yielded.

### <Another example composition 1: cobalt-nickel system>

There is formed a green sheet which has a thickness of 20 µm or less and contains an NiO powder, a Co₃O₄ powder, and Al₂O₃ powder. The green sheet is atmospherically-sintered at a temperature which falls within a range of 1,000°C to 1,400°C for a predetermined time, thereby yielding an independent film-like sheet composed of a large number of (h00)-oriented plate-like (Ni,Co,AI)O grains. By means of adding additives, such as MnO₂ and ZnO, grain growth is accelerated, resulting in enhancement of (h00) orientation of plate-like crystal grains.

The (h00)-oriented (Ni,Co,AI)O ceramic sheet yielded in the above-mentioned process and lithium nitrate (LiNO₃) are mixed, followed by heating for a predetermined time, whereby lithium is introduced into the (Ni,Co,Al)O grains. Thus is yielded a (104)-oriented Li (Ni_{0.75}CO_{0.2}Al_{0.05})O₂ plate-like sheet for cathode active material.

### [Example 5]

### «Preparation of slurry»

First, a slurry was prepared by the following method.

An NiO powder (particle size: 1 µm to 10 µm; product of Seido Chemical Industry Co., Ltd.)(75.1 parts by weight), a Co₃O₄ powder (particle size: 1 µm to 5 µm; product of Seido Chemical Industry Co., Ltd.)(21.5 parts by weight), and an Al₂O₃ powder (particle size: 1 µm to 10 µm; product of Showa Denko K.K.) (3.4 parts by weight) were mixed and pulverized, followed by heat treatment at 1,300°C in the atmosphere for five hours. Thus was synthesized an (Ni,Co,Al)O powder.

The powder was milled in a pot mill for 16 hours, thereby yielding (Ni,Co,Al)O material particles (particle size: 0.3 µm). The material particles (100 parts by weight), a dispersion medium (toluene : isopropanol = 1 : 1)(100 parts by weight), a binder (polyvinyl butyral: product No. BM-2; product of Sekisui Chemical Co. Ltd.)(10 parts by weight), a plasticizer (DOP: Di (2-ethylhexyl) phthalate; product of Kurogane Kasei Co., Ltd.)(4 parts by weight), and a dispersant (product name RHEODOL SP-O30, product of Kao Corp.)(2 parts by weight) were mixed. The resultant mixture was stirred under reduced pressure for defoaming and was prepared to a viscosity of 3,000 cP to 4,000 cP.

### <<Formation of tape>>

The thus-prepared slurry was formed into a sheet on a PET film by the doctor blade process such that the thickness of the sheet was 8 µm as measured after drying.

### <<Sintering>>

A 50 mm square piece was cut out from the sheet-like compact separated from the PET film by means of a cutter; the piece was placed at the center of a setter (dimensions: 90 mm square × 1 mm high) made of zirconia and embossed in such a manner as to have a protrusion size of 300 µm, followed by heat treatment at 1,300°C in air for 10 hours; the atmosphere of the sintering furnace was changed to an oxygen atmosphere, the temperature was lowered to room temperature at a rate of 200°C/h; and a portion of the piece which was not fused to the setter was taken out.

### «Lithium introduction»

The thus-yielded (Ni,Co,Al)O ceramic sheet and an LiNO₃ powder (product of Kanto Chemical Co., Inc.) were mixed at a mol ratio Li/(NiCoAI) of 1.5. The resultant mixture was heat-treated at 750°C in an oxygen atmosphere (0.1 MPa) for five hours, thereby yielding an Li (Ni,Co,Al)O₂ sheet. The sheet surface was subjected to XRD measurement (evaluation of orientation); as a result, the [003]/[104] ratio was found to be 0.4.

### <<Evaluation>>

Tables 3 and 4 show the results of evaluation of various experimental examples which were rendered different in the degree of orientation by changing the conditions of heat treatment (sheet sintering) and lithium introduction as employed in Example 5. In the tables, Experimental Example 14 coincides with Example 5 described above. Cell characteristics were evaluated with respect to a state of powder (the evaluation method is similar to that of Example 2 described above) and a state of self-standing film (the evaluation method is similar to that of Example 3 described above).

**[Table 3]**

| | Sheet sintering conditions | | Lithium introduction conditions | | |
|---|---|---|---|---|---|
| | Temp.[°C] | Time[h] | Temp.[°C] | Time[h] | Oxygen partial pressure[MPa] |
| Comp. Ex. 5 | 1150 | 5 | 750 | 10 | 0.1 |
| Exp. Ex. 11 | 1300 | 5 | 750 | 10 | 0.1 |
| Exp. Ex. 12 | 1300 | 10 | 800 | 10 | 0.1 |
| Exp. Ex. 13 | 1300 | 10 | 750 | 10 | 0.1 |
| Exp. Ex. 14 | 1300 | 10 | 750 | 5 | 0.1 |
| Exp. Ex. 15 | 1300 | 20 | 750 | 5 | 0.2 |
| Exp. Ex. 16 | 1300 | 20 | 750 | 5 | 0.4 |
| Comp. Ex. 6 | 1300 | 20 | 750 | 5 | 0.6 |

**[Table 4]**

| | [003]/[104] Peak intensity ratio | Plate-like particle | | Active material film | |
|---|---|---|---|---|---|
| | | Discharge capacity [mAh/g] | Capacity retention percentage [%] | Discharge capacity [mAh/g] | Capacity retention percentage [%] |
| Comp. Ex. 5 | 1.8 | 105 | 95 | 80 | 96 |
| Exp. Ex. 11 | 1 | 125 | 95 | 100 | 96 |
| Exp. Ex. 12 | 0.8 | 130 | 94 | 105 | 96 |
| Exp. Ex. 13 | 0.6 | 145 | 94 | 120 | 95 |
| Exp. Ex. 14 | 0.4 | 150 | 94 | 130 | 95 |
| Exp. Ex. 15 | 0.1 | 150 | 93 | 130 | 92 |
| Exp. Ex. 16 | 0.005 | 150 | 90 | 135 | 92 |
| Comp. Ex. 6 | 0.003 | 150 | 85 | 135 | 86 |

As shown in Table 4, in Comparative Example 5, in which the ratio [003]/[104] was in excess of 1.0, the discharge capacity lowered. In Comparative Example 6, in which the ratio [003]/[104] is less than 0.005, the capacity retention percentage lowered. In Experimental Examples 11 to 16, in which the ratio [003]/[104] falls within a range of 0.005 to 1.0, good discharge capacity and capacity retention percentage were exhibited.

In the above-mentioned examples, a portion of nickel in a cobalt-nickel system is substituted with aluminum. However, the present invention is not limited thereto. Needless to say, the present invention can also be favorably applied to Li(Ni,CO)O₂.

### <Another composition example 2: cobalt-nickel-manganese 3-element system>

There is formed, by the following method, an independent film-like sheet composed of grains oriented such that the (101) or (104) planes are in parallel with the plate surface of grain: a green sheet having a thickness of 100 µm or less is formed by use of an Li(Ni_{1/3}Mn_{1/3}Co_{1/3})O₂ powder, and the green sheet is sintered at a temperature falling within a range of 900°C to 1,200°C for a predetermined time.

The specifics of reason why the process yields oriented grains are not clear. However, an assumed reason is as follows. When the green sheet is sintered, only those particles whose crystal faces having the lowest crystal strain energy are present within the plane of the green sheet selectively undergo in-plane flat (plate-like) grain growth. As a result, there is yielded plate-like crystal grains of Li(Ni_{1/3}Mn_{1/3}Co_{1/3})O₂ which have high aspect ratio and in which particular crystal faces (herein, the (101) and (104) planes) are oriented in parallel with the plate surface.

Herein, the strain energy refers to internal stress in the course of grain growth and stress associated with defect or the like. A layer compound is generally known to have high strain energy.

Both of strain energy and surface energy contribute to selective grain growth (preferred orientation) of grains oriented in a particular direction. The (003) plane is most stable with respect to surface energy, whereas the (101) and (104) planes are stable with respect to strain energy.

At a film thickness of 0.1 µm or less, the ratio of surface to sheet volume is high; thus, selective growth is subjected to surface energy, thereby yielding (003)-plane-oriented grains. Meanwhile, at a film thickness of 0.1 µm or greater, the ratio of surface to sheet volume lowers; thus, selective growth is subjected to strain energy, thereby yielding (101)-plane- and (104)-plane-oriented grains. However, a sheet having a film thickness of 100 µm or greater encounters difficulty in densification. Thus, internal stress is not accumulated in the course of grain growth, so that selective orientation is not confirmed.

At a temperature of 1,000°C or higher, at which grain growth is accelerated, the present material suffers volatilization of lithium and decomposition due to structural instability. Thus, it is important, for example, to excessively increase the lithium content of material for making compensation for volatilizing lithium, to control atmosphere (for example, in sintering within a closed container which contains a lithium compound, such as lithium carbonate) for restraining decomposition, and to perform low-temperature sintering through addition of additives, such as Bi₂O₃ and low-melting-point glass.

The film-like sheet yielded in the above-mentioned sheet formation step is in such a state that the sheet is apt to break at grain boundaries. Thus, the film-like sheet yielded in the above-mentioned sheet formation step is placed on a mesh having a predetermined mesh size, and then a spatula is pressed against the sheet from above, whereby the sheet is crushed into a large number of Li(Ni_{1/3}Mn_{1/3}Co_{1/3})O₂ particles.

Alternatively, plate-like crystal grains of Li(Ni_{1/3}Mn_{1/3}Co_{1/3})O₂ can also be yielded by the following manufacturing method.

There is formed a green sheet which has a thickness of 20 µm or less and contains an NiO powder, an MnCO₃ powder, and a Co₃O₄ powder. The green sheet is sintered in an Ar atmosphere at a temperature which falls within a range of 900°C to 1,300°C for a predetermined time, thereby yielding an independent film-like sheet composed of a large number of (h00)-oriented plate-like (Ni,Mn,Co)₃O₄ grains. In the course of the sintering, (Ni,Mn,Co)₃O₄ having a spinel structure is phase-transformed to (Ni,Mn,Co)O having a rock salt structure through reduction.

At this time, only those particles whose crystal faces having the lowest surface energy are present within the plane of the green sheet selectively undergo in-plane flat (plate-like) grain growth. As a result, sintering the sheet yields plate-like crystal grains of (Ni,Mn,Co)O which have high aspect ratio and in which particular crystal faces (herein, the (h00) planes) are oriented in parallel with the plate surface of the grain.

In the process of temperature lowering, through replacement of the atmosphere within the furnace with an oxygen atmosphere, (Ni,Mn,Co)O is oxidized into (Ni,Mn,Co)₃O₄. At this time, the orientation of (Ni,Mn,Co)O is transferred, thereby yielding plate-like crystal grains of (Ni,Mn,Co)₃O₄ in which particular crystal faces (herein, the (h00) planes) are oriented in parallel with the plate surface of the grain.

In the oxidation from (Ni,Mn,Co)O to (Ni,Mn,Co)₃O₄, the degree of orientation is apt to deteriorate for the following reason: since (Ni,Mn,Co)O and (Ni,Mn,Co)₃O₄ differ greatly in crystal structure and Ni-O, Mn-O, and Co-O interatomic distances, oxidation (i.e., insertion of oxygen atoms) is apt to be accompanied by a disturbance of crystal structure.

Thus, preferably, conditions are selected as appropriate so as to avoid deterioration in the degree of orientation to the greatest possible extent. For example, reducing the temperature-lowering rate, holding at a predetermined temperature, and reducing the partial pressure of oxygen are preferred.

The film-like sheet yielded in the above-mentioned sheet formation step is in such a state that the sheet is apt to break at grain boundaries. Thus, the film-like sheet yielded in the above-mentioned sheet formation step is placed on a mesh having a predetermined mesh size, and then a spatula is pressed against the sheet from above, whereby the sheet is crushed into a large number of (Ni,Mn,Co)₃O₄ particles.

The (h00)-oriented (Ni,Mn,Co)₃O₄ particles yielded in the above-mentioned crushing step and Li₂CO₃ are mixed. The resultant mixture is heated for a predetermined time, whereby lithium is intercalated into the (Ni,Mn,Co)₃O₄ particles. Thus, there is yielded (104)-oriented Li(Ni_{1/3}Mn_{1/3}Co_{1/3})O₂; i.e., the plate-like particles 15b2 for cathode active material.

### [Example 6]

### «Preparation of slurry»

First, a slurry was prepared by the following method.

An NiO powder (particle size: 1 µm to 10 µm; product of Seido Chemical Industry Co., Ltd.)(24.4 parts by weight), an MnCO₃ powder (particle size: 1 µm to 10 µm; product of Tosoh Corp.)(28.4 parts by weight), a Co₃O₄ powder (particle size: 1 µm to 5 µm; product of Seido Chemical Industry Co., Ltd.)(26.2 parts by weight), and an Li₂CO₃ powder (particle size: 10 µm to 50 µm; product of Kanto Chemical Co., Inc.) (21.0 parts by weight) were mixed and pulverized so as to attain a composition of Li_{1.20}(Ni_{1/3}Mn_{1/3}Co_{1/3})O₂. The resultant powder mixture in a closed sheath was heat-treated at 720°C for 24 hours in the atmosphere. Thus was synthesized an Li_{1.20}(Ni_{1/3}Mn_{1/3}Co_{1/3})O₂ powder.

The powder was milled in a pot mill for 5 hours, thereby yielding Li(Ni_{1/3}Mn_{1/3}Co_{1/3})O₂ material particles (particle size: 0.3 µm). The material particles (100 parts by weight), a dispersion medium (toluene : isopropanol = 1 : 1)(100 parts by weight), a binder (polyvinyl butyral: product No. BM-2; product of Sekisui Chemical Co. Ltd.)(10 parts by weight), a plasticizer (DOP: Di (2-ethylhexyl) phthalate; product of Kurogane Kasei Co., Ltd.)(4 parts by weight), and a dispersant (product name RHEODOL SP-O30, product of Kao Corp.)(2 parts by weight) were mixed. The resultant mixture was stirred under reduced pressure for defoaming and was prepared to a viscosity of 3,000 cP to 4,000 cP.

### <<Formation of tape>>

The thus-prepared slurry was formed into a sheet on a PET film by the doctor blade process such that the thickness of the sheet was 16 µm as measured after drying.

### <<Sintering>>

A 30 mm square piece was cut out from the sheet-like compact separated from the PET film by means of a cutter; the piece was placed at the center of a setter (dimensions: 90 mm square × 1 mm high) made of zirconia and embossed in such a manner as to have a protrusion size of 300 µm. The setter was placed in a sheath in which an Li₂CO₃ powder (1 g) was placed. The sheath closed with a cover was subjected to sintering at 1,120°C for 10 hours. Then, a portion of the piece which was not fused to the setter was taken out.

The ceramic sheet yielded through sintering was placed on a mesh having an opening diameter of 100 µm, and then a spatula was lightly pressed against the ceramic sheet so as to cause the ceramic sheet to pass through the mesh, thereby crushing the ceramic sheet into a powder. The yielded powder was analyzed for components by means of ICP (inductively coupled plasma) emission spectrophotometer (product name ULTIMA2, product of HORIBA Ltd.) and was found to be of Li_{1.05}(Ni_{1/3}Mn_{1/3}Co_{1/3})O₂. The yielded powder was subjected to XRD measurement and was found to have a ratio [003]/[104] of 0.4.

### <<Evaluation>>

Tables 5 and 6 show the results of evaluation of various experimental examples which were rendered different in the degree of orientation by changing the conditions of heat treatment (sheet sintering), etc. as employed in Example 6. In the tables, Experimental Example 20 coincides with Example 6 described above. In Comparative Example 7 and Experimental Examples 17 and 18, Bi₂O₃ (particle size: 0.3 µm; product of Taiyo Koko Co., Ltd.) was added in preparation of slurry.

**[Table 5]**

| | Bi₂O₃ additive amount[wt.%] | Sheet sintering conditions | | |
|---|---|---|---|---|
| | | Temp.[°C] | Time[h] | Atmosphere |
| Comp. Ex. 7 | 0.5 | 1050 | 1 | Air |
| Exp. Ex. 17 | 0.2 | 1070 | 5 | Air |
| Exp. Ex. 18 | 0.1 | 1090 | 10 | Air |
| Exp. Ex. 19 | 0 | 1120 | 6 | Air |
| Exp. Ex. 20 | 0 | 1120 | 10 | Air |
| Exp. Ex. 21 | 0 | 1150 | 5 | Oxygen |
| Exp. Ex. 22 | 0 | 1180 | 8 | Oxygen |
| Comp. Ex. 8 | 0 | 1180 | 15 | Oxygen |

**[Table 6]**

| | [003]/[104] Peak intensity ratio | Plate-like particle | | Active material film | |
|---|---|---|---|---|---|
| | | Discharge capacity [mAh/g] | Capacity retention percentage [%] | Discharge capacity [mAh/g] | Capacity retention percentage [%] |
| Comp. Ex. 7 | 1.4 | 90 | 95 | 70 | 94 |
| Exp. Ex. 17 | 1 | 110 | 95 | 95 | 94 |
| Exp. Ex. 18 | 0.8 | 115 | 94 | 100 | 93 |
| Exp. Ex. 19 | 0.6 | 120 | 94 | 105 | 93 |
| Exp. Ex. 20 | 0.4 | 130 | 94 | 120 | 93 |
| Exp. Ex. 21 | 0.1 | 130 | 93 | 120 | 93 |
| Exp. Ex. 22 | 0.005 | 130 | 90 | 120 | 92 |
| Comp. Ex. 8 | 0.003 | 130 | 85 | 120 | 87 |

As shown in Tables 5 and 6, since sintering at low temperature for a short time with Bi₂O₃ added in a relatively large amount leads to abrupt, isotropic grain growth, Comparative Example 7 shows plate-like particles which are dense, but are not oriented. In this case, discharge capacity lowered considerably. Also, in Comparative Example 8 in which the ratio [003]/[104] is less than 0.005, capacity retention percentage lowered. In Experimental Examples 17 to 22 in which the ratio [003]/[104] falls within a range of 0.005 to 1.0, good discharge capacity and capacity retention percentage were exhibited.
(1-3') Although the ratio Li/Co is not limited to 1.0, it falls preferably within a range of 0.9 to 1.2, more preferably within a range of 1.0 to 1.1. Thus, good charge-discharge characteristics can be realized.

### [Example 7]

Powdery LiCoO₂ was manufactured by a method similar to that in Experimental Example 3 except that the ratio Li/Co was 1.2 when sprinkling LiNO₃ powder on Co₃O₄ ceramic sheet. Extra lithium compound was removed by washing treatment of the resultant powdery LiCoO₂. Thereafter, by componential analysis using the above-described ICP emission spectrophotometer, it was revealed that Li/Co = 1.1. In addition, an XRD measurement (evaluation of the orientation) showed that X-ray diffraction intensity ratio [003]/[104] = 0.3. By contrast, a similar componential analysis of the powdery LiCoO₂ manufactured in Experimental Example 3 revealed that Li/Co = 1.0.

### [Example 8]

An independent film-like LiCoO₂ ceramic sheet (self-standing film) with a thickness of 10 µm was manufactured by a method similar to that in Experimental Example 8 except that the ratio Li/Co was 1.2 when sprinkling LiNO₃ powder on Co₃O₄ ceramic sheet. Extra lithium compound was removed by crushing on a mesh and washing treatment of the resultant film-like LiCoO₂ ceramic sheet. Thereafter, by componential analysis using the above-described ICP emission spectrophotometer, it was revealed that Li/Co = 1.1. In addition, an XRD measurement (evaluation of the orientation) showed that X-ray diffraction intensity ratio [003]/[104] = 0.3. By contrast, a similar componential analysis of the film-like LiCoO₂ ceramic sheet manufactured in Experimental Example 8 revealed that Li/Co = 1.0.

### [Example 9]

Li(Ni,Co,Al)O₂ powder was manufactured by a method similar to that in Experimental Example 14 except that the mole fraction Li/(NiCoAl) was 2.0 when mixing (Ni,Co,AI)O ceramic sheet with LiNO₃ powder. Extra lithium compound was removed by washing treatment of the resultant Li(Ni,Co,Al)O₂ sheet. Thereafter, by componential analysis using the above-described ICP emission spectrophotometer, it was revealed that Li/(NiCoAI) = 1.1. In addition, an XRD measurement (evaluation of the orientation) showed that X-ray diffraction intensity ratio [003]/[104] = 0.4. By contrast, a similar componential analysis of the Li(Ni,Co,Al)O₂ sheet manufactured in Experimental Example 14 revealed that Li/(NiCoAl) = 1.0.
(1-4) The applications of the plate-like particle for cathode active material of the present invention are not limited to a liquid-type lithium secondary battery, such as the lithium secondary battery 10 shown in FIG. 1A. For example, an inorganic solid, an organic polymer, or a gel formed by impregnating an organic polymer with an electrolytic solution can be used as electrolyte.

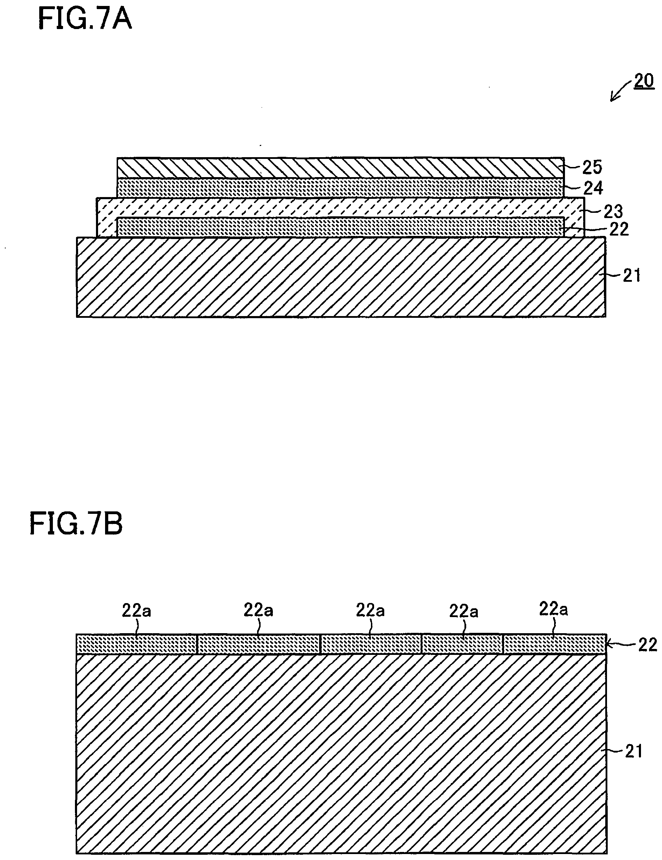

FIG. 7A is a sectional view of the schematic configuration of a lithium secondary battery 20 of a modification. Referring to FIG. 7A, the lithium secondary battery 20 is of a so-called full solid type and includes a cathode collector 21, a cathode active material layer 22, a solid electrolyte layer 23, an anode active material layer 24, and an anode collector 25. The lithium secondary battery 20 is formed by laminating, on the cathode collector 21, the cathode active material layer 22, the solid electrolyte layer 23, the anode active material layer 24, and the anode collector 25 in this order.

Since the basic configuration of the lithium secondary battery 20 (including materials used to form the cathode collector 21, the solid electrolyte layer 23, the anode active material layer 24, and the anode collector 25) shown in FIG. 7A is well known, detailed description thereof is omitted herein.

FIG. 7B is an enlarged sectional view of the cathode active material layer 22 shown in FIG. 7A. Referring to FIG. 7B, the cathode active material layer 22, which serves as the cathode active material film of the present invention, is formed such that a large number of plate-like grains (or crystallites) 22a are joined together in planar directions to assume a film-like form. The plate-like grain 22a also has a structure similar to that of the plate-like particle 15b2 for cathode active material in the above-described embodiment (for example, a structure in which planes other than the (003) plane (e.g., the (104) plane) are exposed at a surface whose direction of normal is along the thickness direction (upper and lower surfaces in the drawing)).

In the thus-configured lithium secondary battery 20, the plate-like grain 22a is such that the percentage of exposure (contact) of the (003) planes, through which lithium ions cannot be intercalated and deintercalated, to the solid electrolyte layer 23 is considerably low. That is, unlike a conventional configuration as disclosed in Japanese Patent Application Laid-Open (*kokai*) No. 2003-132887, in the lithium secondary battery 20 of the present modification, almost all the surface of the cathode active material layer 22 which faces (is in contact with) the solid electrolyte layer 23 is composed of those planes (e.g., the (104) planes) through which lithium ions are favorably intercalated and deintercalated.

Thus, according to the present invention, the full-solid-type lithium secondary battery 20 achieves higher capacity and higher rate characteristic. Further, by increasing the size of the plate-like grain 22a, durability is improved, and far higher capacity and far higher rate characteristic are achieved.

In formation of the cathode active material layer 22 of the thus-configured lithium secondary battery 20, the crushing step in the above-described embodiment is not carried out. That is, the Co₃O₄ ceramic sheet yielded through sintering of a green sheet is not crushed and is intercalated with lithium.

In the above-described modification, the cathode active material layer 22 is applied to a full-solid-type cell. Nevertheless, the present invention can also be applied to a liquid-type cell. Usually, material for a positive electrode of a liquid-type cell is filled with an active material at a filling rate of about 60%. By contrast, the active material film of the present invention achieves substantially a filling rate of 100% while planes through which lithium ions are intercalated and deintercalated are arrayed over the entire film surface. That is, while the sacrifice of rate characteristic is minimalized, a very high capacity is attained.

The cathode active material layer 22 and the cathode collector 21 may be merely in contact with each other at the interface therebetween or may be bonded together by means of a thin layer of an electrically conductive binder, such as acetylene black. In the latter case, bending of the cathode collector 21 may cause cracking in the cathode active material layer 22. Nevertheless, such a crack is in parallel with the direction of conduction of electrons and ions. Thus, the occurrence of cracking does not raise any problem with respect to characteristics.

The surface of the cathode active material layer 22 may be polished to flatness. In this case, in order to remove stress and defect which remain on the polished surface, heat treatment at 1,000°C or lower may be conducted. The heat treatment improves adhesion between the cathode collector 21 and the solid electrolyte layer 23, and also improves charge-discharge characteristic because of exposure of active crystal faces.

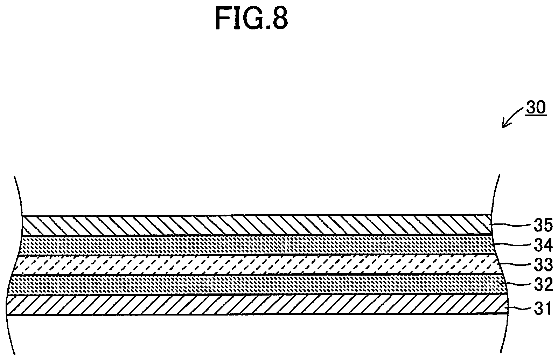

FIG. 8 is a sectional view of the schematic configuration of a lithium secondary battery 30 of another modification. Referring to FIG. 8, the lithium secondary battery 30 is of a so-called polymer type and includes a cathode collector 31, a cathode active material layer 32, a polymer electrolyte layer 33, an anode active material layer 34, and an anode collector 35. The lithium secondary battery 30 is formed by laminating, on the cathode collector 31, the cathode active material layer 32, the polymer electrolyte layer 33, the anode active material layer 34, and the anode collector 35 in this order. The cathode active material layer 32, which serves as the cathode active material film of the present invention, has a constitution similar to that of the above-described cathode active material layer 22 (see FIG. 7B).

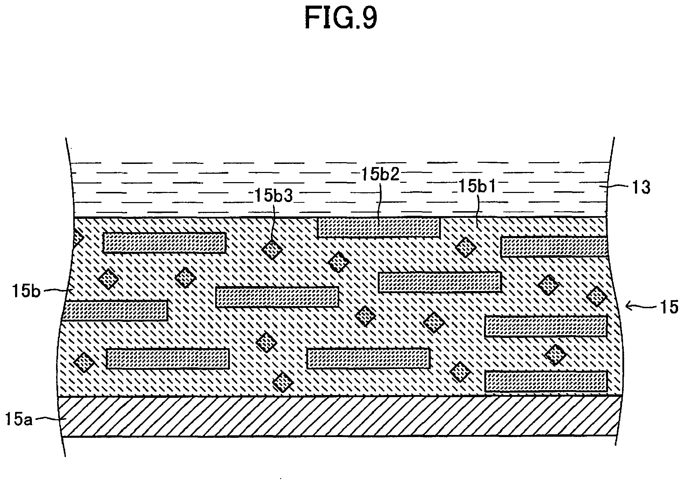

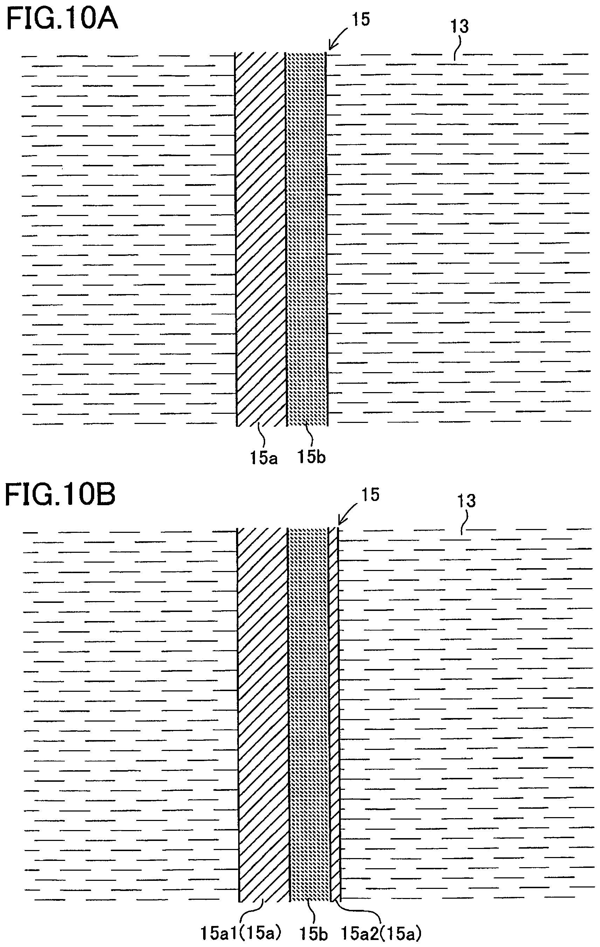

As compared with a liquid type having the risk of liquid leakage, the polymer-type lithium secondary battery 30 is characterized in that a thin cell configuration is possible. The film-like cathode active material layer 32 of the present invention achieves substantially a filling rate of 100% while planes through which lithium ions are intercalated and deintercalated are arrayed over the entire film surface. That is, as compared with conventional practices, the positive electrode portion can be rendered very thin, and a thinner cell can be implemented.
(1-5) For example, the plate-like particles 15b2 of the present invention of a plurality of sizes and shapes may be blended as appropriate in the cathode active material layer 15b. As shown in FIG. 9, the plate-like particles 15b2 for cathode active material of the present invention and conventional isometric particles 15b3 may be mixed at an appropriate mixing ratio. For example, by means of mixing, at an appropriate mixing ratio, isometric particles and the plate-like particles 15b2 for cathode active material having a thickness substantially equivalent to the particle size of the isometric particle, the particles can be efficiently arrayed, whereby the filling rate can be raised.
(1-6) As mentioned above, when the cathode active material layer 15b is a self-standing-film-like LiCoO₂ ceramic sheet (cathode active material film), the cathode collector 15a may be provided on only one of both plate surfaces of the cathode active material layer 15b as shown in FIG. 10A, and may be provided on both plate surfaces of the cathode active material layer 15b as shown in FIG. 10B.

When the cathode collector 15a is provided on both plate surfaces of the cathode active material layer 15b as shown in FIG, 10B, one of the cathode current collectors, i.e. the cathode collector 15a1, may be formed thicker than the other cathode collector 15a2 in order to support the self-standing film-like cathode active material layer 15b. In addition, in this case, the other positive electrode collector 15a2 is formed as to have a structure (mesh-like, porous or the like) not to inhibit the intercalation and deintercalation of lithium ions in the self-standing film-like cathode active material layer 15b. Further, the cathode collector 15a2 is applicable to the positive electrode 15 shown in FIG. 1B as well.

When the cathode collector 15a is provided on only one of both plate surfaces of the cathode active material layer 15b as shown in FIG. 10A, during the cell reactions in the positive electrode 15 on charging and discharging, the direction of the movement of lithium ions and that of electrons become converse, and thus an electric potential gradient occurs within the cathode active material layer 15b. When the electric potential gradient increases, lithium ions become difficult to diffuse.

By contrast, when the cathode collector 15a2 not inhibiting the intercalation and deintercalation of lithium ions is provided on the surface contacting the electrolyte 13 in the self-standing film-like cathode active material layer 15b as shown in FIG. 10B, the formation of electric potential gradient as described above is suppressed. Thus, the cell performance is improved.
(2) The present invention is not limited to the manufacturing methods disclosed specifically in the description of the above-described embodiment.

For example, the sintering temperature for the green sheet may be a temperature falling within a range of 900°C to 1,300°C. Also, the additive used in the sheet formation step is not limited to Bi₂O₃.

Further, in place of the material particles of Co₃O₄ used in the above-described specific examples, material particles of CoO can be used. In this case, sintering a slurry yields, in a temperature range of 900°C or higher, a (h00)-oriented CoO sheet having a rock salt structure. Oxidizing the CoO sheet, for example, at about 800°C or lower yields a sheet composed of (h00)-oriented Co₃O₄ particles having a spinel structure, the array of Co atoms and O atoms in CoO being partially transferred to the Co₃O₄ particles.

In the lithium introduction step, in place of merely mixing the (h00)-oriented Co₃O₄ particles and Li₂CO₃, followed by heating for a predetermined time, the (h00)-oriented Co₃O₄ particles and Li₂CO₃ may be mixed and heated in flux, such as sodium chloride (melting point: 800°C) or potassium chloride (melting point: 770°C).

## Claims

1. A cathode active material for a lithium secondary battery (10), the cathode active material comprising either:
(a) a plate-like particle (15b2), the particle (15b2) having a layered rock salt structure, wherein a (003) plane is oriented so as to intersect a plate surface of the particle (15b2), a plane other than the (003) plane is oriented in parallel with the plate surface, and a (h'k'l') plane different from a (hkl) plane oriented in parallel with the plate surface is oriented in a plurality of directions; or:
(b) a cathode active material film, the cathode active material film having a layered rock salt structure, wherein the cathode active material film is a self-standing sintered film and a plane other than a (003) plane is oriented in parallel with a plate surface of the cathode active material film, and (h'k'l') planes different from a (hkl) plane oriented in parallel with the plate surface are oriented in a plurality of directions.

2. A cathode active material for a lithium secondary battery (10) in the form of a plate-like particle (15b2) according to claim 1, wherein a (104) plane is oriented in parallel with the plate surface, and
the particle (15b2) has a ratio of intensity of diffraction by the (003) plane to intensity of diffraction by the (104) plane, [003]/[104], as obtained by X-ray diffraction falling within a range of 0.005 to 1.0.

3. A cathode active material for a lithium secondary battery (10) in the form of a plate-like particle (15b2) according to claim 2 wherein the X-ray diffraction measurement is carried out by the following method:
a mixture prepared by adding 0.1 g of the plate-like particles (15b2) to 2 g of ethanol is subjected to dispersion for 30 minutes by means of an ultrasonic dispersing device, and the resultant dispersion liquid is spin-coated at 2,000 rpm onto a glass substrate measuring 25 mm x 50 mm so as to prevent overlap of the plate-like particles (15b2) to the greatest possible extent and to bring crystal faces in parallel with the glass substrate surface; and
the surfaces of the plate-like particles (15b2) are irradiated with X-rays so as to measure an X-ray diffraction profile, thereby obtaining the ratio of intensity of diffraction by the (003) plane to intensity of diffraction by the (104) plane.

4. A cathode active material for a lithium secondary battery (10) in the form of a cathode active material film according to claim 1, wherein a (104) plane is oriented in parallel with the plate surface, and
the film has a ratio of intensity of diffraction by the (003) plane to intensity of diffraction by the (104) plane, [003]/[104], as obtained by X-ray diffraction falling within a range of 0.005 to 1.0.

5. A lithium secondary battery (10) **characterized by** comprising:
a positive electrode which contains a cathode active material according to any one of claims 1 to 4;
a negative electrode which contains a carbonaceous material or a lithium-occluding material as an anode active material; and
an electrolyte provided so as to intervene between the positive electrode and the negative electrode.

6. A method for manufacturing a cathode active material for a lithium secondary battery (10) according to any one of claims 1 to 4, the method comprising either:
(a) manufacturing plate-like particles (15b2) by a forming step of forming a self-standing sheet-like compact having a thickness of 100 µm or less from material particles, and a sintering step of sintering the compact;
or:
(b) manufacturing a cathode active material film by a forming step of forming a self-standing sheet-like compact having a thickness of 100 µm or less from material particles, and a sintering step of sintering the compact.

7. A method for manufacturing a cathode active material for a lithium secondary battery (10) according to claim 6, the method further comprising:
a lithium introduction step of introducing lithium into the sheet-like compact sintered in the sintering step.

8. A method for manufacturing a cathode active material for a lithium secondary battery (10) according to claim 7, the method further comprising:
a crushing step of crushing the compact which has undergone the lithium introduction step.

9. A method for manufacturing a cathode active material for a lithium secondary battery (10) according to claim 6, the method further comprising:
a crushing step of crushing the sheet-like compact sintered in the sintering step; and
a lithium introduction step of introducing lithium into plate-like particles (15b2) yielded in the crushing step.

10. A method for manufacturing a cathode active material for a lithium secondary battery (10) according to claim 6, wherein the method further comprises:
forming said sheet-like compact of a lithium-unintroduced material in which an (h00) plane is oriented in parallel with a plate surface of said sheet-like compact; and
introducing lithium into the said sheet-like compact.

11. A method for manufacturing a cathode active material for a lithium secondary battery (10) according to claim 10, wherein forming said sheet-like compact comprises:
a step of forming a green sheet which contains the lithium-unintroduced material and a bismuth oxide; and
a step of sintering the green sheet at a temperature falling within a range of 900°C to 1,300°C.

12. A method for manufacturing a cathode active material for a lithium secondary battery (10) according to claim 10 or 11, **characterized by** further comprising:
a step of crushing said sheet-like compact into which lithium has been introduced into a large number of plate-like particles (15b2).

13. A method for manufacturing a cathode active material for a lithium secondary battery (10) according to claim 6, wherein forming said sheet-like compact comprises:
forming plate-like lithium-unintroduced particles (15b2) in which an (h00) plane is oriented in parallel with a plate surface of the plate-like lithium-unintroduced particle; and
introducing lithium into the lithium-unintroduced particles.

14. A method for manufacturing a cathode active material for a lithium secondary battery (10) according to claim 13, wherein forming the lithium-unintroduced particles (15b2) comprises:
a step of forming a sheet of a lithium-unintroduced material in which an (h00) plane is oriented in parallel with a plate surface of the sheet; and
a step of crushing the sheet into a large number of lithium-unintroduced material particles (15b2).

15. A method for manufacturing a cathode active material for a lithium secondary battery (10) according to claim 14, **characterized in that** introducing lithium comprises:
a step of mixing the lithium-unintroduced particles (15b2) yielded by the crushing step and a lithium salt, followed by heating.

## Patentansprüche

1. Kathodenaktives Material für eine Lithium-Sekundärbatterie (10), wobei das kathodenaktive Material eines von Folgendem umfasst:
(a) ein plattenartiges Partikel (15b2), wobei das Partikel (15b2) eine Steinsalzschichtstruktur aufweist, wobei eine (003)-Ebene derart ausgerichtet ist, dass sie eine Plattenoberfläche des Partikels (15b2) schneidet, eine von der (003)-Ebene sich unterscheidende Ebene parallel zur Plattenoberfläche ausgerichtet ist, und eine von einer (hkl)-Ebene, die parallel zur Plattenoberfläche ausgerichtet ist, sich unterscheidende (h'k'l')-Ebene in einer Vielzahl von Richtungen ausgerichtet ist; oder
(b) einen Kathodenaktivmaterialfilm, wobei der Kathodenaktivmaterialfilm eine Steinsalzschichtstruktur aufweist, wobei der Kathodenaktivmaterialfilm ein freistehender gesinterter Film ist, und eine sich von einer (003)-Ebene sich unterscheidende Ebene parallel zu einer Plattenoberfläche des Kathodenaktivmaterialfilms ausgerichtet ist, und von einer (hkl)-Ebene, die zur Plattenoberfläche parallel ausgerichtet ist, sich unterscheidende (h'k'l')-Ebenen in einer Vielzahl von Richtungen ausgerichtet sind.

2. Kathodenaktives Material für eine Lithium-Sekundärbatterie (10) in Form eines plattenartigen Partikels (15b2) gemäß Anspruch 1, wobei eine (104)-Ebene parallel zur Plattenoberfläche ausgerichtet ist, und
wobei das Partikel (15b2) ein Verhältnis einer Beugungsintensität durch die (003)-Ebene zu einer Beugungsintensität durch die (104)-Ebene, [003]/[104], aufweist, das durch Röntgenbeugung erhalten wird, und in einen Bereich von 0,005 bis 1,0 fällt.

3. Kathodenaktives Material für eine Lithium-Sekundärbatterie (10) in Form eines plattenartigen Partikels (15b2) gemäß Anspruch 2, wobei die Röntgenbeugungsmessung durch das folgende Verfahren durchgeführt wird:
eine Mischung, die durch Hinzufügen von 0,1 g der plattenartigen Partikel (15b2) zu 2 g Ethanol hergestellt wird, wird 30 Minuten lang mittels einer Ultraschalldispergiervorrichtung einer Dispergierung unterzogen, und die daraus resultierende Dispersionsflüssigkeit wird durch Schleuderbeschichtung bei 2.000 U/min auf ein Glassubstrat von 25 mm x 50 mm aufgetragen, um so ein Überlappen der plattenartigen Partikel (15b2) in größtmöglichem Umfang zu verhindern und Kristallflächen parallel zur Glassubstratoberfläche anzuordnen; und
wobei die Oberflächen der plattenartigen Partikel (15b2) mit Röntgenstrahlen bestrahlt werden, um so ein Röntgenbeugungsprofil zu messen, wodurch das Verhältnis einer Beugungsintensität durch die (003)-Ebene zu einer Beugungsintensität durch die (104)-Ebene erhalten wird.

4. Kathodenaktives Material für eine Lithium-Sekundärbatterie (10) in Form eines kathodenaktiven Materialfilms gemäß Anspruch 1, wobei eine (104)-Ebene parallel zur Plattenoberfläche ausgerichtet ist, und
wobei der Film ein Verhältnis einer Beugungsintensität durch die (003)-Ebene zu einer Beugungsintensität durch die (104)-Ebene, [003]/[104], aufweist, das durch Röntgenbeugung erhalten wird, und in einen Bereich von 0,005 bis 1,0 fällt.

5. Lithium-Sekundärbatterie (10), **gekennzeichnet durch** Umfassen von Folgendem:
eine positive Elektrode, die ein kathodenaktives Material gemäß einem der Ansprüche 1 bis 4 enthält;
eine negative Elektrode, die ein kohlenstoffhaltiges Material oder ein lithiumeinschließendes Material als ein anodenaktives Material enthält; und
einen Elektrolyten, der derart vorgesehen ist, dass er zwischen der positiven Elektrode und der negativen Elektrode dazwischenliegend angeordnet ist.

6. Verfahren zur Herstellung eines kathodenaktiven Materials für eine Lithium-Sekundärbatterie (10) gemäß einem der Ansprüche 1 bis 4, wobei das Verfahren eines von Folgendem umfasst:
(a) Herstellen von plattenartigen Partikeln (15b2) durch einen Ausbildungsschritt des Ausbildens eines freistehenden plattenförmigen Presslings, der eine Dicke von 100 µm oder weniger von Materialpartikeln aufweist, und einen Sinterschritt des Sinterns des Presslings;
oder
(b) Herstellen eines Kathodenaktivmaterialfilms durch einen Ausbildungsschritt des Ausbildens eines freistehenden plattenförmigen Presslings, der eine Dicke von 100 µm oder weniger von Materialpartikeln aufweist, und einen Sinterschritt des Sinterns des Presslings.

7. Verfahren zur Herstellung eines kathodenaktiven Materials für eine Lithium-Sekundärbatterie (10) gemäß Anspruch 6, wobei das Verfahren ferner Folgendes umfasst:
einen Lithiumeinbringungsschritt des Einbringens von Lithium in den im Sinterschritt gesinterten, plattenförmigen Pressling.

8. Verfahren zur Herstellung eines kathodenaktiven Materials für eine Lithium-Sekundärbatterie (10) gemäß Anspruch 7, wobei das Verfahren ferner Folgendes umfasst:
einen Zerkleinerungsschritt des Zerkleinerns des Presslings, der dem Lithiumeinbringungsschritt unterzogen worden ist.

9. Verfahren zur Herstellung eines kathodenaktiven Materials für eine Lithium-Sekundärbatterie (10) gemäß Anspruch 6, wobei das Verfahren ferner Folgendes umfasst:
einen Zerkleinerungsschritt des Zerkleinerns des im Sinterschritt gesinterten, plattenförmigen Presslings; und
einen Lithiumeinbringungsschritt des Einbringens von Lithium in plattenartige Partikel (15b2), die sich aus dem Zerkleinerungsschritt ergeben.

10. Verfahren zur Herstellung eines kathodenaktiven Materials für eine Lithium-Sekundärbatterie (10) gemäß Anspruch 6, wobei das Verfahren ferner Folgendes umfasst:
Ausbilden des plattenförmigen Presslings aus einem Material, in das kein Lithium eingebracht worden ist, in dem eine (h00)-Ebene parallel zu einer Plattenoberfläche des plattenförmigen Presslings ausgerichtet ist; und
Einbringen von Lithium in den plattenförmigen Pressling.

11. Verfahren zur Herstellung eines kathodenaktiven Materials für eine Lithium-Sekundärbatterie (10) gemäß Anspruch 10, wobei ein Ausbilden des plattenförmigen Presslings Folgendes umfasst:
einen Schritt des Ausbildens einer grünen Platte, die Material, in das kein Lithium eingebracht worden ist, und ein Bismutoxid enthält; und
einen Schritt des Sinterns der grünen Platte bei einer Temperatur, die in einen Bereich von 900°C bis 1.300°C fällt.

12. Verfahren zur Herstellung eines kathodenaktiven Materials für eine Lithium-Sekundärbatterie (10) gemäß Anspruch 10 oder 11, **gekennzeichnet durch** ferner Folgendes:
einen Schritt des Zerkleinerns des plattenförmigen Presslings, in den Lithium in eine große Anzahl von plattenartigen Partikeln (15b2) eingebracht worden ist.

13. Verfahren zur Herstellung eines kathodenaktiven Materials für eine Lithium-Sekundärbatterie (10) gemäß Anspruch 6, wobei ein Ausbilden des plattenförmigen Presslings Folgendes umfasst:
Ausbilden von plattenartigen Partikeln (15b2), in die kein Lithium eingebracht worden ist, in denen eine (h00)-Ebene parallel zu einer Plattenoberfläche des plattenartigen Partikels, in das kein Lithium einbracht worden ist, ausgerichtet ist; und
Einbringen von Lithium in die Partikel, in die kein Lithium eingebracht worden ist.

14. Verfahren zur Herstellung eines kathodenaktiven Materials für eine Lithium-Sekundärbatterie (10) gemäß Anspruch 13, wobei ein Ausbilden der Partikel (15b2), in die kein Lithium eingebracht worden ist, Folgendes umfasst:
einen Schritt des Ausbildens einer Platte aus einem Material, in das kein Lithium eingebracht worden ist, in dem eine (h00)-Ebene parallel zu einer Plattenebene der Platte ausgerichtet ist; und
einen Schritt des Zerkleinerns der Platte in eine große Anzahl von Lithium-Materialpartikeln (15b2), in die kein Lithium eingebracht worden ist.

15. Verfahren zur Herstellung eines kathodenaktiven Materials für eine Lithium-Sekundärbatterie (10) gemäß Anspruch 14, **gekennzeichnet dadurch, dass** ein Einbringen von Lithium Folgendes umfasst:
einen Schritt des Mischens der Partikel (15b2), in die kein Lithium eingebracht worden ist, die sich aus dem Zerkleinerungsschritt ergeben, und einem Lithiumsalz, und anschließendes Erhitzen.

## Revendications

1. Matériau actif de cathode pour une batterie auxiliaire au lithium (10), le matériau actif de cathode comprenant soit :
(a) une particule de type plaque (15b2), la particule (15b2) ayant une structure en sel de roche en couche, dans lequel un plan (003) est orienté de sorte à croiser une surface plane de la particule (15b2), un plan autre que le plan (003) est orienté parallèlement à la surface plane, et un plan (h'k'l') différent d'un plan (hkl) orienté parallèlement à la surface plane est orienté dans une pluralité de directions ; soit :
(b) un film de matériau actif de cathode, le film de matériau actif de cathode ayant une structure en sel de roche en couche, dans lequel le film de matériau actif de cathode est un film fritté autoportant et un plan autre qu'un plan (003) est orienté parallèlement à une surface plane du film de matériau actif de cathode, et des plans (h'k'l') différents d'un plan (hkl) orienté parallèlement à la surface plane sont orientés dans une pluralité de directions.

2. Matériau actif de cathode pour une batterie auxiliaire au lithium (10) sous la forme d'une particule de type plaque (15b2) selon la revendication 1, dans lequel un plan (104) est orienté parallèlement à la surface plane, et
la particule (15b2) a un rapport entre l'intensité de diffraction par le plan (003) et l'intensité de diffraction par le plan (104), [003]/[104], tel qu'obtenu par diffraction des rayons X tombant dans une plage de 0,005 à 1,0.

3. Matériau actif de cathode pour une batterie auxiliaire au lithium (10) sous la forme d'une particule de type plaque (15b2) selon la revendication 2, dans lequel la mesure de diffraction des rayons X est réalisée par le procédé suivant :
un mélange préparé par ajout de 0,1 g des particules de type plaque (15b2) à 2 g d'éthanol est soumis à une dispersion pendant 30 minutes au moyen d'un dispositif de dispersion ultrasonique, et le liquide de dispersion est appliqué par centrifugation à 2000 trs/min. sur un substrat en verre mesurant 25 mm x 50 mm de sorte à empêcher le chevauchement des particules de type plaque (15b2) dans toute la mesure du possible et à amener les faces cristallines parallèlement à la surface du substrat en verre ; et
les surfaces des particules de type plaque (15b2) sont irradiées avec des rayons X de sorte à mesurer un profil de diffraction des rayons X, obtenant ainsi le rapport entre l'intensité de diffraction par le plan (003) et l'intensité de diffraction par le plan (104).

4. Matériau actif de cathode pour une batterie auxiliaire au lithium (10) sous la forme d'un film de matériau actif de cathode selon la revendication 1, dans lequel un plan (104) est orienté parallèlement à la surface plane, et
le film a un rapport entre l'intensité de diffraction par le plan (003) et l'intensité de diffraction par le plan (104), [003]/[104], tel qu'obtenu par diffraction des rayons X tombant dans une plage de 0,005 à 1,0.

5. Batterie auxiliaire au lithium (10) **caractérisée en ce qu'**elle comprend :
une électrode positive qui contient un matériau actif de cathode selon l'une quelconque des revendications 1 à 4 ;
une électrode négative qui contient un matériau charbonneux ou un matériau absorbant le lithium en tant que matériau actif d'anode ; et
un électrolyte prévu pour intervenir entre l'électrode positive et l'électrode négative.

6. Procédé de fabrication d'un matériau actif de cathode pour une batterie auxiliaire au lithium (10) selon l'une quelconque des revendications 1 à 4, le procédé comprenant soit :
(a) la fabrication de particules de type plaque (15b2) par une étape de formation consistant à former une pastille de type feuille autoportante ayant une épaisseur inférieure ou égale à 100 µm à partir de particules de matériau, et une étape de frittage consistant à fritter la pastille ;
(b) la fabrication d'un film de matériau actif de cathode par une étape de formation consistant à former une pastille de type feuille autoportante ayant une épaisseur inférieure ou égale à 100 µm à partir de particules de matériau, et une étape de frittage consistant à fritter la pastille.

7. Procédé de fabrication d'un matériau actif de cathode pour une batterie auxiliaire au lithium (10) selon la revendication 6, le procédé comprenant en outre :
une étape d'introduction de lithium consistant à introduire du lithium dans la pastille de type feuille frittée dans l'étape de frittage.

8. Procédé de fabrication d'un matériau actif de cathode pour une batterie auxiliaire au lithium (10) selon la revendication 7, le procédé comprenant en outre :
une étape de broyage consistant à broyer la pastille qui a subi l'étape d'introduction de lithium.

9. Procédé de fabrication d'un matériau actif de cathode pour une batterie auxiliaire au lithium (10) selon la revendication 6, le procédé comprenant en outre :
une étape de broyage consistant à broyer la pastille de type feuille frittée dans l'étape de frittage ; et
une étape d'introduction de lithium consistant à introduire du lithium dans des particules de type plaque (15b2) produites dans l'étape de broyage.

10. Procédé de fabrication d'un matériau actif de cathode pour une batterie auxiliaire au lithium (10) selon la revendication 6, dans lequel le procédé comprend en outre :
la formation de ladite pastille de type feuille d'un matériau sans introduction de lithium dans lequel un plan (h00) est orienté parallèlement à une surface plane de ladite pastille de type feuille ; et
l'introduction de lithium dans ladite pastille de type feuille.

11. Procédé de fabrication d'un matériau actif de cathode pour une batterie auxiliaire au lithium (10) selon la revendication 10, dans lequel la formation de ladite pastille de type feuille comprend :
une étape de formation d'une feuille verte qui contient le matériau sans introduction de lithium et un oxyde de bismuth ; et
une étape de frittage de la feuille verte à une température tombant dans une plage de 900°C à 1300°C.

12. Procédé de fabrication d'un matériau actif de cathode pour une batterie auxiliaire au lithium (10) selon la revendication 10 ou 11, **caractérisé en ce qu'**il comprend en outre :
une étape de broyage de ladite pastille de type feuille dans laquelle du lithium a été introduit dans un grand nombre de particules de type plaque (15b2).

13. Procédé de fabrication d'un matériau actif de cathode pour une batterie auxiliaire au lithium (10) selon la revendication 6, dans lequel la formation de ladite pastille de type feuille comprend :
la formation de particules sans introduction de lithium de type plaque (15b2) dans laquelle un plan (h00) est orienté parallèlement à une surface plane de la particule sans introduction de lithium de type plaque ; et
l'introduction de lithium dans les particules sans introduction de lithium.

14. Procédé de fabrication d'un matériau actif de cathode pour une batterie auxiliaire au lithium (10) selon la revendication 13, dans lequel la formation des particules sans introduction de lithium (15b2) comprend :
une étape de formation d'une feuille d'un matériau sans introduction de lithium dans laquelle un plan (h00) est orienté parallèlement à une surface plane de la feuille ; et
une étape de broyage de la feuille en un grand nombre de particules de matériau sans introduction de lithium (15b2).

15. Procédé de fabrication d'un matériau actif de cathode pour une batterie auxiliaire au lithium (10) selon la revendication 14, **caractérisé en ce que** l'introduction de lithium comprend :
une étape de mélange de particules sans introduction de lithium (15b2) produites par l'étape de broyage et d'un sel de lithium, suivie d'un chauffage.
